# EUROPEAN PATENT APPLICATION

(11) **EP 4 723 694 A1**
(43) Date of publication of application: **08.04.2026**
(21) Application number: 24825245.4
(22) Date of filing: 18.06.2024
(51) Int. Cl.: H04W 4/80

(54) **COMMUNICATION METHOD AND APPARATUS**

(30) Priority: 20.06.2023 CN 202310740279
(71) Applicant: Huawei Technologies Co., Ltd., Shenzhen, Guangdong 518129 (CN)
(72) Inventor: LI, Chenwan, Shenzhen, Guangdong 518129 (CN); WU, Yiling, Shenzhen, Guangdong 518129 (CN); CHEN, Lei, Shenzhen, Guangdong 518129 (CN)
(74) Representative: Thun, Clemens
(86) International application number: PCT/CN2024/099937
(87) International publication number: WO 2024/260351

(57) **Abstract**

This application provides a communication method and apparatus. The method includes: receiving a first message from a second network device by using a first access technology, where the first message is used for paging, the first message includes first information, and the first information indicates a second access technology; and sending a second message by using the second access technology, where the second message is used to page a terminal device. According to the method described in this application, a coverage area can be increased.

## Description

### TECHNICAL FIELD

This application relates to the field of communication technologies, and in particular, to a communication method and apparatus.

### BACKGROUND

Radio frequency identification (radio frequency identification, RFID) is one of automatic identification technologies, and is used for non-contact bidirectional data communication through wireless radio frequency. RFID is mainly used for identity identification. In some scenarios, RFID can also be used to read and write user data. A radio frequency identification system includes a reader (reader) and a tag (tag). The reader may be understood as a network device in the RFID system, and the tag may be understood as a terminal device in the RFID system. For example, the tag may be an electronic shelf label of a supermarket, and the reader may be a handheld terminal device that can read/write the electronic shelf label, or the reader may be a network device in a local area network built by the supermarket. The reader can read tag information in the tag or write tag information into the tag. Currently, because costs and design complexity of the terminal such as the tag are low, coverage supported by the tag is poor, and consequently a coverage area of the reader is limited.

### SUMMARY

Embodiments of this application provide a communication method and apparatus, to increase a coverage area of a reader/writer.

In the method provided in embodiments of this application, a function of a reader is jointly implemented by a first network device and a second network device. The first network device is a network device having a forwarding function, and the second network device is a network device having a function of communicating with a core network. In the method, a tag may be understood as a terminal device.

According to a first aspect, this application provides a communication method. Optionally, the method may be performed by a first network device (for example, a relay node or a distribution unit), or may be performed by a component (for example, a processor, a chip, or a chip system) of the first network device, or may be implemented by a logical module or software that can implement all or some functions of the first network device. The method includes:
receiving a first message from a second network device by using a first access technology, where the first message is used for paging, the first message includes first information, and the first information indicates a second access technology; and sending a second message by using the second access technology, where the second message is used to page a terminal device.

According to the method, the first network device may be introduced, and the first network device forwards a paging message from the second network device to the terminal device, so that the second network device can page a terminal device that is farther away from the second network device, thereby increasing a coverage area. The first information is carried in the first message, so that the first network device can distinguish between a terminal device using the second access technology and a terminal device using the first access technology, and determine to page the terminal device by using the second access technology. In this way, the first network device can serve two terminal devices using different access technologies. In addition, according to the method, the first network device communicates with the second network device by using the first access technology, and the first network device communicates with the terminal device by using the second access technology, thereby implementing layer 2 relay of a network node.

In a possible implementation, first data from a first terminal device is received by using the second access technology; and a third message is sent to the second network device by using the first access technology, where the third message includes the first data and the first information.

According to the method, the first network device may forward the first data from the first terminal device to the second network device, so that the second network device can receive data sent by a terminal device that is farther away from the second network device, thereby increasing a coverage area. The first information is carried in the third message, so that the second network device can distinguish between a terminal device using the second access technology and a terminal device using the first access technology, and determine to process the first data by using the second access technology. In this way, the second network device can serve two terminal devices using different access technologies.

It may be understood that the first information carried in the third message may be the first information carried in the first message, or may be a variant of the first information carried in the first message, or may be information with a function similar to that of the first information carried in the first message. That the third message includes the first information may be replaced with that the third message includes third information, and the third information indicates the second access technology. For the third information, refer to the descriptions of the first information.

In another possible implementation, the second message indicates N random access occasions, the N random access occasions are used for access of M terminal devices, N and M are positive integers, and M is less than or equal to N; and the method further includes: receiving, on a first random access occasion in the N random access occasions, first data from a first terminal device by using the second access technology, where the first terminal device is one of the M terminal devices; sending a third message to the second network device by using the first access technology, where the third message includes the first data and the first information; and sending a fourth message by using the second access technology, where the fourth message is used to trigger a next random access occasion.

According to the method, the first information is carried in the third message, so that the second network device can determine to process data from the M terminal devices by using the second access technology, and the network does not need to maintain one terminal-specific identifier or one terminal-specific context for each of the M terminal devices, thereby reducing network implementation complexity.

In another possible implementation, the second message indicates N random access occasions, the N random access occasions are used for access of M terminal devices, N and M are positive integers, and M is less than or equal to N; and the method further includes: receiving, on a first random access occasion in the N random access occasions, first data from a first terminal device by using the second access technology, where the first terminal device is one of the M terminal devices; sending a fourth message by using the second access technology, where the fourth message is used to trigger a next random access occasion; receiving, on a second random access occasion after the first random access occasion, second data from a second terminal device by using the second access technology, where the second terminal device is one of the M terminal devices, and the second random access occasion is one of the N random access occasions; and sending a third message to the second network device by using the first access technology, where the third message includes the first data and/or the second data, and the third message further includes the first information.

According to the method, the first network device may forward, to the second network device before or after the next random access occasion is triggered, the data received from the first terminal device. The first network device may alternatively forward, to the second network device at a time, one piece of data received from the terminal device, or may forward, to the second network device at a time, two or more pieces of data received from the terminal device. This improves implementation flexibility of the first network device.

In another possible implementation, the first message further includes second information, the second information indicates a first service type in a service type of a service using the second access technology, and the method further includes: determining, based on the first service type, a quantity of exchanges of exchanging data with a terminal device; and sending a fourth message by using the second access technology includes: sending the fourth message after completing data transmission for the quantity of exchanges.

According to the method, the first network device may determine, based on the first service type, the quantity of data exchanges needed by the service, to determine whether a terminal device can be released, or determine whether a next random access occasion can be triggered.

In another possible implementation, the first message further includes second information, the second information indicates a first service type in a service type of a service using the second access technology, and the method further includes: determining, based on the first service type, duration of exchanging data with a terminal device; and sending the fourth message by using the second access technology includes: sending the fourth message after performing data transmission for the duration with the first terminal device.

According to the method, the first network device may determine, based on the first service type, the data exchange duration needed by the service, to determine whether a terminal device can be released, or determine whether a next random access occasion can be triggered.

In another possible implementation, the first message further includes second information, the second information indicates a first service type in a service type of a service using the second access technology, and sending the fourth message by using the second access technology includes: sending the fourth message after receiving indication information indicating end or release from the second network device.

According to the method, the first network device may determine, based on the first service type, that an indication of the second network device needs to be received, and determine, based on the indication, whether a terminal device can be released, or whether a next random access occasion can be triggered.

In another possible implementation, the first message further includes second information, the second information indicates a first service type in a service type of a service using the second access technology, and the method further includes: determining, based on the first service type, a quantity of exchanges or duration of exchanging data with a terminal device; and including an identifier specific to the terminal device when performing data transmission for the quantity of exchanges or the duration with the second network device.

According to the method, the first network device may determine, based on the first service type, the quantity of data exchanges or the data exchange duration needed by the service, and also allocate a terminal-specific identifier to the terminal device, where the identifier indicates that exchanged data belongs to the terminal device. In this way, data exchange of the first service type may be performed in time other than a random access occasion at which the terminal device successfully performs access, thereby improving flexibility.

In another possible implementation, the first message further includes second information, the second information indicates a first service type in a service type of a service using the second access technology, and the method further includes: including an identifier specific to the terminal device when performing data transmission with the second network device; and releasing the terminal device after receiving indication information indicating end or release from the second network device.

According to the method, the first network device may determine, based on the first service type, that a terminal-specific identifier needs to be allocated to the terminal device, where the identifier indicates that exchanged data belongs to the terminal device. In this way, data exchange of the first service type may be performed in time other than a random access occasion at which the terminal device successfully performs access, thereby improving flexibility. In addition, the first network device may determine, based on the first service type, that an indication of the second network device needs to be received, and determine, based on the indication, whether a terminal device can be released.

In another possible implementation, the first information or the third information is one of the following: a terminal type of a terminal using the second access technology, a terminal identifier of a terminal using the second access technology, a service type of a service using the second access technology, a service identifier of a service using the second access technology, and an identifier of the second access technology.

In another possible implementation, the second information is one of the following: a service type of a service using the second access technology or a service identifier of a service using the second access technology.

It may be understood that the first information and the second information may be a same information element, a same field, a same parameter, or the like, or may be different information elements, different fields, different parameters, or the like.

In another possible implementation, the first access technology is a new radio NR technology, and the second access technology is an access technology used for the internet of things.

According to the method, a coverage area supported by an internet of things device can be increased, and the NR technology can be used for relay, thereby reducing implementation complexity.

According to a second aspect, this application provides a communication method. Optionally, the method may be performed by a second network device (for example, a base station or a central unit), or may be performed by a component (for example, a processor, a chip, or a chip system) of the second network device, or may be implemented by a logical module or software that can implement all or some functions of the second network device. The method includes:
sending a first message to a first network device by using a first access technology, where the first message is used to page a first terminal device, the first message includes first information, the first information indicates a second access technology, the first information indicates the first network device to send a second message by using the second access technology, and the second message is used to page the first terminal device.

According to the method, the first network device may be introduced, and the first network device forwards a paging message to the terminal device, so that the second network device can page a terminal device that is farther away from the second network device, thereby increasing a coverage area. The first information is carried in the first message, so that the first network device can distinguish between a terminal device using the second access technology and a terminal device using the first access technology, and determine to page the terminal device by using the second access technology. In this way, the second network device can page two terminal devices using different access technologies. In addition, according to the method, the first network device communicates with the second network device by using the first access technology, and the first network device communicates with the terminal device by using the second access technology, thereby implementing layer 2 relay of a network node.

In a possible implementation, a third message from the first network device is received by using the first access technology, where the third message includes first data and the first information; and the first data is processed by using the second access technology.

According to the method, the first network device may forward the first data from the terminal device, so that the second network device can receive data sent by a terminal device that is farther away from the second network device, thereby increasing a coverage area. The first information is carried in the third message, so that the second network device can distinguish between a terminal device using the second access technology and a terminal device using the first access technology, and determine to process the first data by using the second access technology. In this way, the second network device can serve two terminal devices using different access technologies.

It may be understood that the first information carried in the third message may be the first information carried in the first message, or may be a variant of the first information carried in the first message, or may be information with a function similar to that of the first information carried in the first message. That the third message includes the first information may be replaced with that the third message includes third information, and the third information indicates the second access technology. For the third information, refer to the descriptions of the first information.

In another possible implementation, the first message further includes second information, the second information indicates a first service type in a service type of a service using the second access technology, and the method further includes: indicating, by using the first service type, a quantity of exchanges or duration of exchanging data with a terminal device.

According to the method, the first network device may determine, based on the first service type, the quantity of data exchanges needed by the service, to determine whether a terminal device can be released, or determine whether a next random access occasion can be triggered.

In another possible implementation, the first message further includes second information, the second information indicates a first service type in a service type of a service using the second access technology, and the method further includes: sending, to the first network device, indication information indicating end or release.

According to the method, the first network device may determine, based on the first service type, that an indication of the second network device needs to be received, and determine, based on the indication, whether a terminal device can be released, or whether a next random access occasion can be triggered.

In another possible implementation, the first message further includes second information, the second information indicates a first service type in a service type of a service using the second access technology, and the method further includes: indicating, by using the first service type, a quantity of exchanges or duration of exchanging data with a terminal device; and including an identifier specific to the terminal device when performing data transmission for the quantity of exchanges or the duration with the first network device.

According to the method, the first network device may determine, based on the first service type, the quantity of data exchanges or the data exchange duration needed by the service, and also allocate a terminal-specific identifier to the terminal device, where the identifier indicates that exchanged data belongs to the terminal device. In this way, data exchange of the first service type may be performed in time other than a random access occasion at which the terminal device successfully performs access, thereby improving flexibility.

In another possible implementation, the first message further includes second information, the second information indicates a first service type in a service type of a service using the second access technology, and the method further includes: including an identifier specific to the terminal device when performing data transmission with the first network device; and sending, to the first network device, indication information indicating end or release.

According to the method, the first network device may determine, based on the first service type, that a terminal-specific identifier needs to be allocated to the terminal device, where the identifier indicates that exchanged data belongs to the terminal device. In this way, data exchange of the first service type may be performed in time other than a random access occasion at which the terminal device successfully performs access, thereby improving flexibility. In addition, the first network device may determine, based on the first service type, that an indication of the second network device needs to be received, and determine, based on the indication, whether a terminal device can be released.

In another possible implementation, the first information or the third information is one of the following: a terminal type of a terminal using the second access technology, a terminal identifier of a terminal using the second access technology, a service type of a service using the second access technology, a service identifier of a service using the second access technology, and an identifier of the second access technology.

In another possible implementation, the second information is one of the following: a service type of a service using the second access technology or a service identifier of a service using the second access technology.

It may be understood that the first information and the second information may be a same information element, a same field, a same parameter, or the like, or may be different information elements, different fields, different parameters, or the like.

In another possible implementation, the first access technology is a new radio NR technology, and the second access technology is an access technology used for the internet of things.

According to the method, a coverage area supported by an internet of things device can be increased, and the NR technology can be used for relay, thereby reducing implementation complexity.

According to a third aspect, this application provides a communication method. Optionally, the method may be performed by a first network device (for example, a relay node or a distribution unit), or may be performed by a component (for example, a processor, a chip, or a chip system) of the first network device, or may be implemented by a logical module or software that can implement all or some functions of the first network device. The method includes:
receiving first data from a terminal device; and when the first data is received by using a second access technology, sending a second message to a second network device by using a first access technology, where the second message includes the first data and first information, and the first information indicates the second access technology.

According to the method, the first network device may be introduced, and the first network device forwards the first data from the terminal device to the second network device, so that the second network device can receive data sent by a terminal device that is farther away from the second network device, thereby increasing a coverage area. The first information is carried in the second message, so that the second network device can distinguish between a terminal device using the second access technology and a terminal device using the first access technology, and determine to process the first data by using the second access technology. In this way, the second network device can serve two terminal devices using different access technologies. In addition, according to the method, the first network device communicates with the second network device by using the first access technology, and the first network device communicates with the terminal device by using the second access technology, thereby implementing layer 2 relay of a network node.

In a possible implementation, before receiving the first data from the terminal device, the method further includes: sending a first message by using the second access technology, where the first message is used to configure a parameter for performing random access by the terminal device.

In a possible implementation, the method further includes: receiving a response message from the second network device by using the first access technology, where the response message includes the first information.

It may be understood that the first information carried in the response message may be the first information carried in the second message, or may be a variant of the first information carried in the second message, or may be information with a function similar to that of the first information carried in the second message. That the response message includes the first information may be replaced with that the response message includes second information, and the second information indicates the second access technology. For the second information, refer to the descriptions of the first information.

In another possible implementation, the first information or the second information is one of the following: a terminal type of a terminal using the second access technology, a terminal identifier of a terminal using the second access technology, a service type of a service using the second access technology, a service identifier of a service using the second access technology, and an identifier of the second access technology.

In another possible implementation, the first access technology is a new radio NR technology, and the second access technology is an access technology used for the internet of things.

According to the method, a coverage area supported by an internet of things device can be increased, and the NR technology can be used for relay, thereby reducing implementation complexity.

According to a fourth aspect, this application provides a communication method. Optionally, the method may be performed by a second network device (for example, a base station or a central unit), or may be performed by a component (for example, a processor, a chip, or a chip system) of the second network device, or may be implemented by a logical module or software that can implement all or some functions of the second network device. The method includes:
receiving a second message from a first network device by using a first access technology, where the second message includes first data and first information, and the first information indicates a second access technology; and processing the first data by using the second access technology.

According to the method, the first network device may be introduced, and the first network device forwards the first data from a terminal device, so that the second network device can receive data sent by a terminal device that is farther away from the second network device, thereby increasing a coverage area. The first information is carried in the second message, so that the second network device can distinguish between a terminal device using the second access technology and a terminal device using the first access technology, and determine to process the first data by using the second access technology. In this way, the second network device can serve two terminal devices using different access technologies. In addition, according to the method, the first network device communicates with the second network device by using the first access technology, and the first network device communicates with the terminal device by using the second access technology, thereby implementing layer 2 relay of a network node.

In another possible implementation, the method further includes: sending a response message to the first network device by using the first access technology, where the response message includes the first information.

It may be understood that the first information carried in the response message may be the first information carried in the second message, or may be a variant of the first information carried in the second message, or may be information with a function similar to that of the first information carried in the second message. That the response message includes the first information may be replaced with that the response message includes second information, and the second information indicates the second access technology. For the second information, refer to the descriptions of the first information.

In another possible implementation, the first information or the second information is one of the following: a terminal type of a terminal using the second access technology, a terminal identifier of a terminal using the second access technology, a service type of a service using the second access technology, a service identifier of a service using the second access technology, and an identifier of the second access technology.

In another possible implementation, the first access technology is a new radio NR technology, and the second access technology is an access technology used for the internet of things.

According to the method, a coverage area supported by an internet of things device can be increased, and the NR technology can be used for relay, thereby reducing implementation complexity.

According to a fifth aspect, this application provides a communication apparatus. The communication apparatus may be the first network device or the second network device, or may be an apparatus in the first network device or the second network device, or may be an apparatus that can be matched with the first network device or the second network device for use. The communication apparatus may alternatively be a chip system. The communication apparatus may perform the method according to the first aspect, the second aspect, the third aspect, or the fourth aspect. A function of the communication apparatus may be implemented by hardware, or may be implemented by hardware executing corresponding software. The hardware or the software includes one or more units or modules corresponding to the foregoing function. The unit or the module may be software and/or hardware.

According to a sixth aspect, this application provides a communication apparatus. The communication apparatus includes a processor, and when the processor invokes a computer program, the method according to the first aspect, the second aspect, the third aspect, or the fourth aspect is performed.

According to a seventh aspect, this application provides a communication apparatus. The communication apparatus includes a processor and a memory, the processor is coupled to the memory, and when the processor invokes a computer program in the memory, the method according to the first aspect, the second aspect, the third aspect, or the fourth aspect is performed.

According to an eighth aspect, this application provides a communication apparatus. The communication apparatus includes a processor, a memory, and a transceiver, and the processor is coupled to the memory. The transceiver is configured to: receive and send data, and the processor is configured to implement the method according to the first aspect, the second aspect, the third aspect, or the fourth aspect.

According to a ninth aspect, this application provides a chip. The chip includes a processor and an interface, the processor is coupled to the interface, the interface is configured to: receive or output a signal, and the processor is configured to execute code instructions, so that the method according to the first aspect, the second aspect, the third aspect, or the fourth aspect is performed.

According to a tenth aspect, this application provides a computer-readable storage medium. The storage medium stores a computer program or instructions, and when the computer program or the instructions are executed by a device, the method according to the first aspect, the second aspect, the third aspect, or the fourth aspect is implemented.

According to an eleventh aspect, this application provides a computer program product including instructions. When a computer reads and executes the computer program product, the computer is enabled to perform the method according to the first aspect, the second aspect, the third aspect, or the fourth aspect.

According to a twelfth aspect, this application provides a communication system. The communication system includes a first network device and a second network device. The first network device is configured to perform the method according to the first aspect, and the second network device is configured to perform the method according to the second aspect. Alternatively, the first network device is configured to perform the method according to the third aspect, and the second network device is configured to perform the method according to the fourth aspect.

For possible implementations and beneficial effects of the fifth aspect to the twelfth aspect, refer to the implementations and beneficial effects of the first aspect, the second aspect, the third aspect, or the fourth aspect.

### BRIEF DESCRIPTION OF DRAWINGS

FIG. 1 is a diagram of a system architecture according to this application;
FIG. 2 is a schematic flowchart of random access according to this application;
FIG. 3 is a diagram of an access scenario according to this application;
FIG. 4 is a schematic flowchart of a communication method according to an embodiment of this application;
FIG. 5 is a schematic flowchart of a communication method according to an embodiment of this application;
FIG. 6 is a schematic flowchart of a communication method according to an embodiment of this application;
FIG. 7 is a schematic flowchart of a communication method according to an embodiment of this application;
FIG. 8 is a schematic flowchart of a communication method according to an embodiment of this application;
FIG. 9 is a schematic flowchart of a communication method according to an embodiment of this application;
FIG. 10 is a schematic flowchart of a communication method according to an embodiment of this application;
FIG. 11a is a diagram of a protocol stack architecture of a communication method according to an embodiment of this application;
FIG. 11b is a diagram of a protocol stack architecture of a communication method according to an embodiment of this application;
FIG. 11c is a diagram of a protocol stack architecture of a communication method according to an embodiment of this application;
FIG. 12 is a diagram of a structure of a communication apparatus according to this application;
FIG. 13 is a diagram of a structure of another communication apparatus according to this application; and
FIG. 14 is a diagram of a structure of a chip according to this application.

### DESCRIPTION OF EMBODIMENTS

To better understand embodiments of this application, the following first describes a system architecture in embodiments of this application.

A radio frequency identification (radio frequency identification, RFID) technology is a non-contact automatic identification technology. An RFID system usually includes a reader (Reader) and a tag (Tag). The tag may also be referred to as an RFID tag or an RFID terminal.

A reader (also referred to as an RFID reader) is a device having a read/write function, for example, may be a device for reading or writing tag information. Alternatively, the reader may be understood as a device that can read (and sometimes can write) tag information.

Types of tags (also referred to as electronic labels or RFID tags) may also be classified into a passive tag (passive tag), a semi-passive tag (semi-passive tag), and an active tag (active tag). The passive tag may also be referred to as a passive tag, the semi-passive tag may also be referred to as a semi-active tag, and the active tag may also be referred to as an active tag. The passive tag and the semi-passive tag communicate with the reader based on a backscatter (backscatter) carrier. The active tag may actively generate a carrier to communicate with the reader. Alternatively, the tag may not be called the foregoing name, and the foregoing different tag types may be replaced with different device types: a device type A (1): having no energy storage, and having no independent signal generation capability, which may be understood as operating based on backscatter (backscatter); a device type B (2): having energy storage, having no independent signal generation capability, that is, operating based on backscatter, and using energy to amplify a backscattering signal; and a device type C (3): having energy storage, and having an independent signal generation capability, that is, an active RF component. The tag may also be referred to as an ambient internet of things (Ambient Internet of Things, AIoT) user equipment (user equipment, UE).

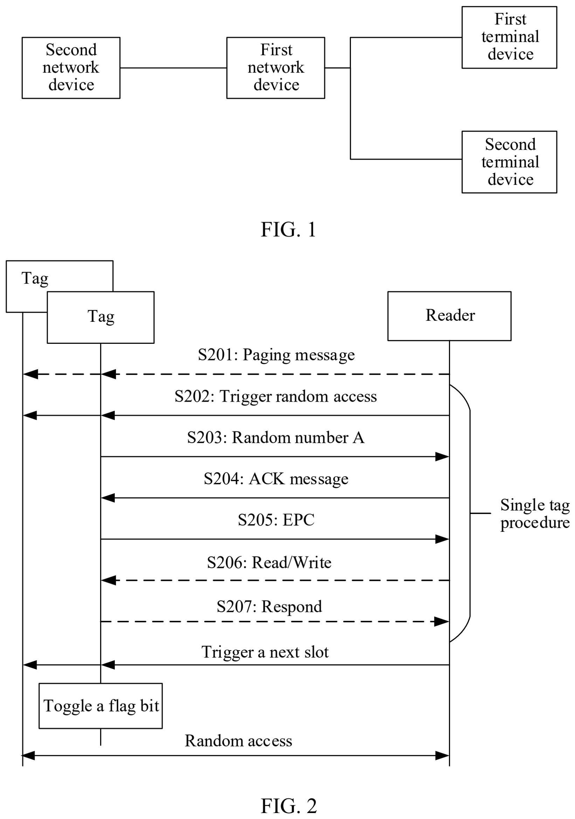

FIG. 1 is a diagram of a system architecture according to an embodiment of this application. As shown in FIG. 1, the system architecture includes a first network device, a second network device, and one or more terminal devices. An architecture including the first network device and the second network device is proposed in this embodiment of this application. In FIG. 1, for example, the system architecture includes a first terminal device and a second terminal device. Certainly, a quantity of terminal devices that communicate with the network device in the system architecture may be greater than 2. This is not limited in this embodiment of this application.

In the architecture provided in this embodiment of this application, a function of a reader is jointly implemented by the first network device and the second network device. The first network device is a network device having a forwarding function, and the second network device is a network device having a function of communicating with a core network.

The first network device is a network device having a forwarding function. For example, the first network device is a relay node or an integrated access and backhaul (integrated access and backhaul, IAB) node, or the first network device is a DU of a base station.

In an architecture in which the first network device is a relay node or an IAB node, or the first network device is a device that completes a function similar to that of the relay node or the IAB node, the second network device may be an access network device or an access network node, that is, a node or a device that enables a terminal device to access a network. For example, a (radio) access network ((radio) access network, (R)AN) node includes but is not limited to a base station (base station), an evolved NodeB (evolved NodeB, eNodeB), an IAB donor station, an access point (access point, AP), a transmission reception point (transmission reception point, TRP), a next generation NodeB (next generation NodeB, gNB), a next generation base station in a mobile communication system, a base station in a future mobile communication system, or an access node in a Wi-Fi system. The RAN node may be a macro base station, a micro base station, an indoor base station, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). All or some functions of the RAN node in this application may alternatively be implemented by using a software function running on hardware, or may be implemented by using an instantiated virtualization function on a platform (for example, a cloud platform). Alternatively, the RAN node in this application may be a logical node, a logical module, or software that can implement all or some functions of the RAN node.

In another possible scenario, a function of the second network device may be coordinated by a plurality of RAN nodes, to jointly assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU herein completes functions of a radio resource control protocol and a packet data convergence protocol (packet data convergence protocol, PDCP) of a base station, and may further complete a function of a service data adaptation protocol (service data adaptation protocol, SDAP). The DU completes functions of a radio link control layer and a medium access control (medium access control, MAC) layer of a base station, and may further complete some or all of functions of a physical layer. For specific descriptions of the foregoing protocol layers, refer to technical specifications related to the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In a CU-DU separation architecture, the first network device is a DU of a base station or a device completing a similar function, and the second network device is a CU of a base station or a device completing a similar function. For descriptions of the DU or the CU of the base station, refer to the foregoing content. Similarly, functions of the CU or the DU of the base station may also be implemented by a plurality of modules or nodes. For details, refer to the foregoing content.

In the architecture provided in embodiments of this application, the terminal device in FIG. 1 may be a tag, or may be a terminal device in a future internet of things technology. 5G ambient IoT emerges because of advantages of an RFID communication technology in low power consumption. To meet an ultra-low power consumption requirement, a terminal device in the ambient IoT also uses a low-precision medium-to-low frequency ring oscillator with low power consumption to receive a downlink signal or receives a downlink signal without a local oscillator. In this receiving manner, downlink receiving power consumption of the terminal device can be further reduced. However, for this low-power consumption receiving manner, only amplitude detection such as envelope detection can be performed, because only a low-precision ring oscillator cannot ensure accurate demodulation of signal phase information. Types of tags may also be classified in another dimension, for example, classified based on a working frequency, or classified based on a packaging type, or classified based on an impact medium.

A terminal device in this embodiment of this application may be a device having a wireless transceiver function. The terminal device may be deployed on land, including an indoor or outdoor terminal device, a handheld terminal device, a wearable terminal device, or a vehicle-mounted terminal device; or may be deployed on a water surface (for example, on a ship); or may be deployed in air (for example, on an airplane, a balloon, or a satellite). For example, the terminal device may be a wireless terminal in industrial control (industrial control), a vehicle-mounted terminal device, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in smart home (smart home), a wearable terminal device, or a tag.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future communication system.

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, the internet of vehicles. Communication manners in an internet of vehicles system are collectively referred to as vehicle-to-X (vehicle-to-X, V2X, where X may represent everything). For example, V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

In the RFID technology, the reader may perform operations such as select (select), inventory (inventory), and access (access) on the tag. The select operation is used to select one tag or a group of tags for inventory and access. The inventory operation may be understood as a process in which the reader identifies the tag. The access operation may be understood as a process in which the reader interacts with the tag. The tag needs to be identified by the reader and then accessed.

With diversification of communication requirements and development of communication technologies, use of an RFID technology in a cellular network becomes an important research direction. In this scenario, the select operation performed by the reader on the tag may be understood as a paging operation. The inventory operation performed by the reader on the tag may be understood as a random access process. The access operation performed by the reader on the tag may be understood as a data transmission process or the like.

For example, a procedure in which the reader performs select (paging), inventory (random access), and access (data transmission) on the tag may be shown in FIG. 2. Refer to FIG. 2. The procedure includes the following steps.

S201: The reader sends a select (select) command, where the select command is used to select one tag or a group of tags.

For example, the select command may include memory information, and a tag whose data stored in a storage area indicated by the memory information is consistent with a mask value is a tag selected by using the select command (or a paging message). The mask value may be indicated in the select command.

For example, the select command may include the following fields: a command field, a target field, an action field, a MemBank field, a pointer field, a length field, a mask field, a truncate field, and a cyclic redundancy check (cyclic redundancy check, CRC) field.

When a value of the command field is 1010, it indicates that a command is the select command.

The target field indicates whether the select command is used to change a state of a select flag (select flag, SL) bit or a state of an inventoried (Inventoried) flag bit.

The inventoried flag bit has four types (or referred to as sessions (session)), and each type corresponds to two states: a state A and a state B. A state of an inventoried flag bit of a tag that has been currently inventoried is toggled, so that a same tag can be prevented from being identified for a plurality of times in one round of inventory process. An SL includes two states: a declared state and an undeclared state.

The action field indicates a change policy of the state of the SL or a state of the inventoried flag bit. A tag paged by the reader may change the state of the SL or the inventoried flag bit according to the policy.

The MemBank field, the pointer field, and the length field jointly indicate the foregoing memory information.

The mask field indicates the mask value.

The truncate field indicates the tag to return a part or all of an electronic product code (electronic product code, EPC).

The CRC field is used to carry CRC.

It should be noted that step S201 is optional, that is, step S201 may not be performed.

S202: The reader triggers random access (random access, RA).

Optionally, the reader may send a Query command to trigger random access. The Query command may indicate a type of inventory flag bit (that is, Sx, where x may be 0, 1, 2, or 3) and a state X (X may be A or B) of the inventory flag bit, indicating that the reader selects a tag whose inventory flag bit Sx is in the state X for access. In addition, the Query command may further indicate a parameter Q, where the parameter Q may indicate a maximum access slot range.

Optionally, a slot may be duration triggered (or activated) by a Query/QueryRep command. Duration of a slot is determined based on a Query/QueryRep command that triggers the slot and a next Query/QueryRep command after the command. The tag may initiate random access in a slot. Further, data transmission may be further performed in a slot. The slot herein may also be referred to as a random access occasion or a time unit. This is not limited in this application.

For a plurality of tags selected by the reader, inventory and access are performed in a time division multiplexing manner. To be specific, after completing inventory and access on a tag, the reader starts to perform inventory and access on a next tag. The following steps are described by using inventory and access on one tag as an example.

S203: The tag sends a random number (random number, RN) A. For example, the random number A may be a 16-bit random number (RN16).

If a tag matches selection of the reader, or is a tag selected by the reader, and a state of an inventory flag bit Sx of the tag is consistent with a state of an inventory flag bit Sx indicated by a Query command, after receiving the Query command, the tag may select a value within a range [0, 2*^{Q}* - 1] based on a parameter Q indicated by the Query command as an initial value of a counter. The initial value of the counter may be understood as a slot number selected by the tag. After the Query command, the counter is decreased by 1 each time the tag receives a QueryRep command. When the counter is decreased to 0, the tag sends the random number A. Alternatively, after the Query command, the counter is increased by 1 each time the tag receives a QueryRep command. When a value by which the counter is decreased is the same as a selected value, the tag sends the random number A.

Optionally, the random number A may be carried in a message A for sending, and the message A may be similar to or understood as a message 3 (Msg3) in a random access process in a cellular network.

It should be noted that the reader may trigger a slot 0 after sending the Query command in step S202. Therefore, when a tag selects 0 within a range [0, 2*^{Q}* - 1] as an initial value of the counter, the tag may perform step S203 after receiving the Query command.

S204: If the reader successfully receives the random number A, the reader sends an acknowledgment (acknowledgment, ACK) message, where the message includes the random number A.

Optionally, the ACK message may be similar to or understood as a message 4 (Msg4) in a random access process in a cellular network, or the ACK message may be understood as a random access response message or a contention resolution message.

After receiving, within specified time, the acknowledgment message that carries the random number A sent by the tag, the tag may perform the following step S205.

S205: The tag sends the electronic product code (electronic product code, EPC).

S206 and S207: After step S205, the reader optionally sends an instruction to the tag, performs an operation such as read or write on the tag, and interacts with the tag; and after receiving the instruction, the tag may respond to the instruction.

After completing inventory and access on the current tag, the reader may send a QueryRep command to start to perform inventory and access on a next tag. After receiving the QueryRep command, a current tag needs to toggle a state of an inventory flag bit Sx of the tag. For example, when X is B, the current tag toggles the state of the inventory flag bit Sx from B to A, to avoid repeated inventory. After another tag receives the QueryRep command, if the counter is decreased to 0, the foregoing steps S203 to S207 are performed.

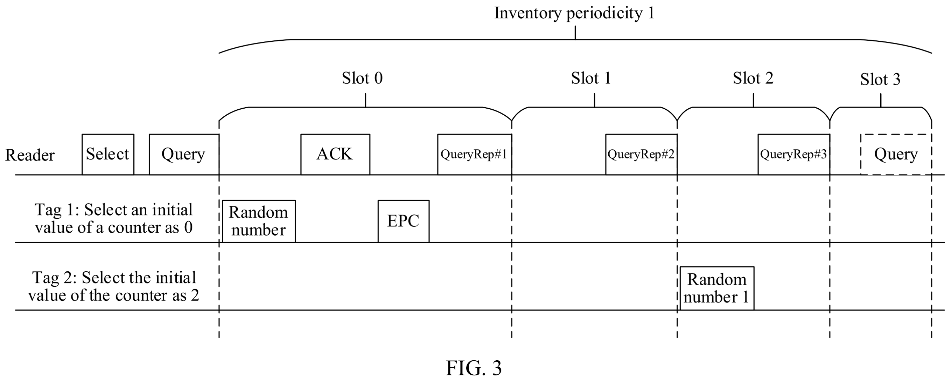

For example, the reader selects two tags (a tag 1 and a tag 2) by using a select command, and indicates that a quantity of slots is 4 by using a Query command, that is, Q is equal to 2. As shown in FIG. 3, the Query command sent by the reader triggers a slot 0, QueryRep#1 triggers a slot 1, Query#2 triggers a slot 2, and Query#3 triggers a slot 3. Assuming that an initial value of the counter that is selected by the tag 1 is 0, the tag 1 may perform the foregoing steps S203 to S205 after receiving the Query command (that is, in the slot 0). Assuming that an initial value of the counter that is selected by tag 2 is 2, after the tag 2 receives QueryRep#1, the value of the counter is decreased to 1, and after the tag 2 receives QueryRep#2, the value of the counter is decreased to 0. Therefore, the tag 2 performs access in the slot 2.

As machine type communication (machine type communication, MTC) and internet of things (internet of things, IoT) communication are widely applied, a quantity of connections of IoT devices in a network is increasing. Therefore, the industry has increasingly strong demands for reducing costs and power consumption of the IoT devices. During 4th generation (4th generation, 4G), a narrowband (narrowband IoT, NB-IoT) system is introduced into the 3rd generation partnership project (3rd generation partnership project, 3GPP). In the NB-IoT system, an NB-IoT terminal needs external power supply (for example, a battery), has a capability of generating a local high-frequency local oscillator carrier, and has power consumption of a milliwatt level. With evolution and development of the 5th generation (5th generation, 5G) IoT, there is an increasingly high requirement for supporting terminals with lower power consumption on 5G networks. The RFID technology provides a good technical reference for low power consumption.

For example, a capability and a carrier of an RFID tag during operating come from the reader, so that the RFID tag can use a low-precision and medium-to-low frequency ring oscillator with low power consumption to receive a downlink signal or receives a downlink signal without a local oscillator, to implement microwatt-level power consumption. 5G ambient (Ambient) IoT emerges because of advantages of the RFID technology in low power consumption. To meet an ultra-low power consumption requirement, a terminal in the ambient IoT (AIOT) is similar to an RFID terminal, and also uses a low-precision and medium-to-low frequency ring oscillator with low power consumption to receive a downlink signal or receives a downlink signal without a local oscillator, to reduce power consumption of the terminal.

Currently, because costs and design complexity of the terminal such as the tag are low, a coverage area supported by the tag is poor, and generally, only a range of several meters can be covered. Therefore, a coverage area supported when the reader is directly connected to the tag is limited. Embodiments of this application provide a communication method, to increase a coverage area of a reader. For example, the coverage area may be increased to dozens of meters or even hundreds of meters.

The following further describes a communication method and apparatus provided in embodiments of this application.

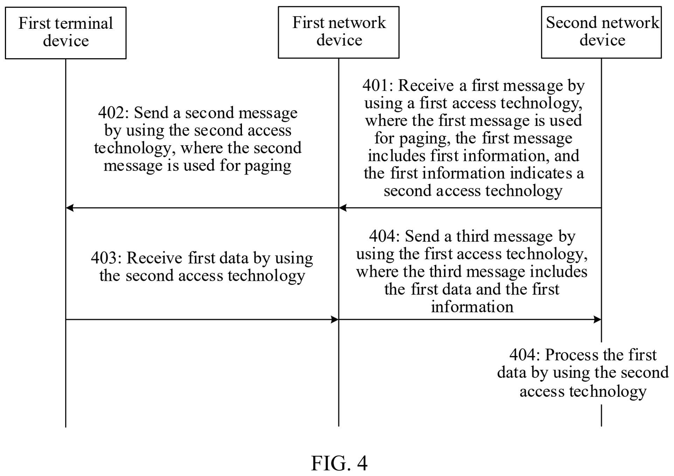

FIG. 4 is a schematic flowchart of a communication method according to an embodiment of this application. The method shown in FIG. 4 may be performed by a first network device, or may be performed by a chip in the first network device, or may be performed by some units or modules in the first network device. Alternatively, the method shown in FIG. 4 may be performed by another type of product, and a person skilled in the art may make further extension according to the content disclosed in the specification. For example, the method shown in FIG. 4 is performed by a first network device. The method shown in FIG. 4 includes step 401 and step 402.

S401: A second network device sends a first message to the first network device by using a first access technology, and correspondingly, the first network device receives the first message from the second network device by using the first access technology, where the first message is used for paging, the first message includes first information, and the first information indicates a second access technology. Alternatively, a second network device sends a first message to the first network device, and correspondingly, the first network device receives the first message from the second network device.

A terminal device communicates with the first network device by using the second access technology, and the first network device communicates with the second network device by using the first access technology. The first access technology or the second access technology may be a wireless access technology, or may be a wired access technology, and is used to connect the terminal to a network. The first access technology may be NR, LTE, a Wi-Fi technology, or a future evolved communication technology. The second access technology may be an access technology used for the internet of things, an access technology used for the ambient internet of things, or an access technology used for an ultra-low complexity/ultra-low power consumption terminal. For example, the second access technology may be an ambient internet of things (Ambient IoT, AIOT) technology.

It may be understood that the second access technology in this embodiment of this application may be a special access technology of the first access technology. For example, the second access technology may be an access technology that is based on the first access technology and that is used for a specific service type. In an example, the second access technology may be an access technology based on an NR access technology and used for the internet of things.

The first message may be an F1-AP interface message. Specifically, the first message may be an F1-AP message used for the first access technology, or may be an F1-AP message used for the second access technology (for example, AIOT). The F1-AP interface message may also be replaced with an interface message between a DU and a CU. The first message is used for paging, and the first message may select or trigger access of at least one terminal device. The first message may be referred to as a paging message, or may have another name. This is not limited in this application.

The first information indicates the second access technology. The first network device may determine, based on the first information, to communicate with the terminal device by using a behavior corresponding to the second access technology. For example, the first network device may determine, based on the first information, when to release a terminal, or determine when to forward, to the second network device, data received from a terminal, or determine whether to pack a plurality of pieces of data received from one or more terminals and then forward the data to the second network device. For details, refer to descriptions in subsequent steps.

The first information may explicitly indicate the second access technology. For example, the first information is an identifier of the second access technology, or the first information indicates the first network device to perform communication by using the second access technology.

The first information may further implicitly indicate the second access technology. For example, the first information may be a terminal type or a terminal identifier, or the first information may be a service type (or a service mode) or a service identifier. A terminal or a service indicated by the first information is a terminal or a service using the second access technology. Therefore, the first information may be a terminal identifier of a terminal using the second access technology, a terminal type of a terminal using the second access technology, a service type of a service using the second access technology, a service identifier of a service using the second access technology, or the like. The first information may also be an RRC message used for the second access technology.

In an example, the first information may be a transaction identifier (transaction ID). The first network device may determine, based on the transaction identifier, that an ongoing service is a service corresponding to the second access technology, or may determine, based on the transaction identifier, that a paged terminal is a terminal corresponding to the second access technology. In another example, the first information may indicate that an ongoing service is a service related to the second access technology, or the first information may indicate a specific service type or service identifier, where the specific service type or service identifier is a service type or a service identifier specific to the second access technology. In another example, the service in the foregoing example may be replaced with a terminal. In a possible implementation, the first message includes a non-access stratum (non-access stratum, NAS) packet data unit (packet data unit, PDU), and the NAS PDU includes information (that is, the first information) used for terminal selection, for example, an application layer mask or other information. The NAS PDU may be application layer data, or may include information used for paging a UE. In another example, the first information may also be one of the device types A, B, and C described above.

For example, the second access technology is an AIOT technology, and the first information may indicate that the service is an AIOT service. Alternatively, the first information may indicate a specific AIOT service mode. For example, the first information indicates that the service mode is an inventory mode, a read mode, a write mode, positioning, or another service mode that may correspond to AIOT. Alternatively, the first information may indicate (or select or trigger) that a currently paged terminal is an AIOT terminal. Alternatively, the first information indicates one or more terminal devices, and the one or more terminal devices are AIOT devices.

Alternatively, the first message may not include the first information, but the first message indicates the second access technology. For example, if the first message is a message dedicated to the second access technology, the first message indicates the second access technology. Correspondingly, the first network device may determine, based on the first message, to communicate with the terminal device by using a behavior corresponding to the second access technology. For a specific example, refer to the foregoing descriptions.

Optionally, before S401, the second network device receives a first paging message from a core network. The message may include first information, or the message may include fourth information, and the fourth information indicates the second access technology. The first information may be a variant of the fourth information, or information that implements a function similar to that of the fourth information. For descriptions of the fourth information, refer to the first information. Alternatively, the first paging message may not include the first information or the fourth information, but the first paging message indicates the second access technology.

S402: The first network device sends a second message by using the second access technology, or the first network device sends a second message. Correspondingly, the first information included in the first message sent by the second network device, or the first message sent by the second network device is used for indication. In addition, the first information or the first message indicates the first network device to send the second message by using the second access technology, or indicates the first network device to send the second message. The second message is used to page the first terminal device.

After receiving the first message carrying the first information in S401, or after receiving the first message, the first network device may determine to page the terminal device. In a possible implementation, the terminal device may be paged by using the second access technology, for example, the method shown in FIG. 2.

Specifically, the first network device may send the second message. The second message may be used to select or trigger access of at least one terminal device. In a possible implementation, the first network device may implement a behavior of the reader in FIG. 2 and FIG. 3. The second message may be a select command or a Query command in FIG. 2, or may be a message having a similar function.

The second message may further indicate N random access occasions, the N random access occasions are used for access of M terminal devices, N and M are positive integers, and M is less than or equal to N. The second message may be the Query command in FIG. 2. As shown in FIG. 3, one slot in FIG. 3 is a random access occasion. The first network device may select two terminal devices (that is, M is equal to 2) by using the select command, and indicate, by using the Query command, that a quantity of slots is 4 (that is, N is equal to 4). Content included in the second message herein may be divided into a plurality of messages for sending, or may be sent in one message. For example, access triggering information is sent by using one message, and random access configuration information is sent by using another message.

Correspondingly, the terminal device may be understood as the tag in FIG. 2 and FIG. 3, and the terminal device may perform access based on the received second message. Specifically, after receiving the second message, the terminal device may determine, based on the second message, that the terminal device is selected or triggered to access a network. Further, the terminal device may receive system information, and initiate access based on an access resource indicated in the system information.

In a possible implementation, the terminal device may perform access based on the select command or the Query command shown in FIG. 2, or perform access based on the QueryRep command. Specifically, the terminal may perform access according to the method in S203 to S205 shown in FIG. 2.

In step S401 and step S402, introducing a relay into an RFID system effectively extends a coverage area of paging a tag by a reader.

After being paged, the terminal device performs access. After the terminal device completes access, the terminal device may perform data transmission with the first network device. Optionally, the method shown in FIG. 4 further includes step 403 and step 404. It may be understood that step 403 and step 404 may be used as separate embodiments. In step S403 and step S404, introducing a relay into an RFID system can effectively extend a coverage area of data communication between the reader and the tag. When step 403 and step 404 are used as separate embodiments, paging may be performed in a paging manner different from that in S401 and S402. This is not limited in this application.

S403: The first network device receives first data from the first terminal device by using the second access technology; or the first network device receives first data from the first terminal device.

The first data may be carried in a NAS message, that is, a NAS PDU. The NAS message may be carried in an uplink RRC message, or the NAS message may be carried in a MAC layer message.

S404: The first network device sends a third message to the second network device by using the first access technology, or the first network device sends a third message to the second network device. Correspondingly, the second network device receives the third message from the first network device by using the first access technology, or the second network device receives the third message from the first network device. Optionally, the second network device processes the first data by using the second access technology. The third message includes the first data and the first information.

It may be understood that the first information carried in the third message may be the first information carried in the first message, or may be a variant of the first information carried in the first message, or may be information with a function similar to that of the first information carried in the first message. That the third message includes the first information may be replaced with that the third message includes third information, and the third information indicates the second access technology. In subsequent descriptions, the first information included in the third message may be replaced with the third information. For the third information, refer to the descriptions of the first information. The third information may be the same as the first information, or may be a part of content of the first information. For example, the first information includes a transaction identifier and an AIOT service dedicated identifier, and the third information is a part of the first information. For example, the third information is a transaction identifier.

Alternatively, the third message may not include the first information or the third information, but the third message indicates the second access technology. For example, if the third message is a message dedicated to the second access technology, the third message indicates the second access technology. The second network device may determine, by using the third message, that content of the message is associated with the second access technology, or determine to process the first data by using the second access technology. For example, the content included in the message is processed by using a protocol stack corresponding to AIOT. The third message described herein may also replace subsequent related descriptions. Details are not described below.

After receiving the first data sent by the terminal, the first network device may forward the received first data to the second network device by sending the third message.

The third message may be an interface message between a relay and a base station, or may be a control plane interface message between a DU and a CU, or may be an interface message between the first network device and the second network device. For example, the interface message may be an F1 interface message, or may be referred to as an F1-AP message, or may have another name. It may be understood that the interface message herein is a higher-layer message, and there may be a plurality of implementations in a lower-layer transmission process. In a possible implementation, the interface message is carried on an IAB backhaul link, that is, the interface message is carried on a backhauled RLC channel.

The third message may be an RRC message including the first data. For example, the third message may include an RRC container (container), and the container includes the first data. Alternatively, the third message may be a MAC layer message including the first data. For example, the first network device may send, to the second network device by using the third message, a data part (or a payload) in a MAC PDU received from the terminal, or the first network device may send an entire MAC data packet to the second network device by using the third message. Alternatively, the third message may include a NAS message or a container.

The third message carries the first information. Therefore, the second network device may determine, based on the first information carried in the third message, to process the first data by using the second access technology. For example, the first data carried in the third message may be interpreted based on a protocol stack or a signaling format of the second access technology. Specifically, the second network device may determine that the third message serves an AIOT service, and therefore may decode the message by using the RRC protocol or PDCP of AIOT. In this embodiment of this application, determining to process the first data by using the second access technology may be replaced with parsing the first data by using the second access technology.

In a possible implementation, a network may page a plurality of terminal devices. After receiving the first message in S401, the first network device may determine, based on the first information or the first message, that data of the plurality of paged UEs may be forwarded to the second network device by using one message. Alternatively, the first network device may determine, based on the first information or the first message, that the plurality of paged UEs may be grouped, and data of each UE group is forwarded to the second network device by using one of the plurality of messages. Optionally, data of different UE groups is forwarded by using different messages in the plurality of messages. Alternatively, the first network device may determine, based on the first information or the first message, that data of the plurality of paged UEs may be forwarded to the second network device by using the plurality of messages. Data of each of the plurality of paged UEs is forwarded to the second network device by using one message. Optionally, data of different UEs is forwarded by using different messages in the plurality of messages.

A quantity of the plurality of UEs may be determined based on a base station implementation, or may be determined based on a quantity of paged UEs.

It may be understood that, when the first network device forwards data of the plurality of paged UEs to the second network device by using one message, or when the first network device groups the plurality of paged UEs, and forwards data of each UE group to the second network device by using one message in the plurality of messages, one message sent by the first network device to the second network device includes data from the plurality of UEs, that is, the first network device packs the data from the plurality of UEs and sends the data to the second network device. This is conducive to avoiding a plurality of times of scheduling performed on a backhaul link, thereby avoiding an increase in a delay and an increase in air interface overheads.

Specifically, for the one or more messages sent by the first network device to the second network device, refer to the descriptions of the third message. Further, when one message includes data from the plurality of UEs, the message may include one RRC message, or the message may include one RRC message list, or the message may include one RRC container list. The RRC message, or an RRC message in the RRC message list, or an RRC container in the RRC container list includes a NAS message (or includes data from one UE).

The one or more messages sent by the first network device to the second network device may carry the first information, or may carry the third information. The third information may be a variant of the first information, and the third information may also be associated with the first message. When the third information is associated with the first message, the first message may not carry the first information. The first information or the third information indicates the second access technology, or indicates that one or more messages sent by the first network device to the second network device are associated with the first message. Specifically, the one or more messages sent by the first network device to the second network device may be a response message or a reply message for the first message.

Specifically, after receiving the first message, the first network device may determine to send the data of the paged UE to the second network device by using one message or together with a plurality of messages.

In an example, the first network device may include one RRC message, one RRC message list, or one RRC container list in the one or more messages sent to the second network device. Each RRC container may include a NAS message. The first network device may determine the operation based on the first message, or may determine the operation based on first indication information included in the first message. Packing and sending a plurality of pieces of data are conducive to avoiding a plurality of times of scheduling that needs to be performed on a backhaul link, thereby avoiding an increase in a delay and an increase in air interface overheads. An uplink transmission message may include indication information, and the indication information may be associated with the first message, to indicate a response message or a reply message corresponding to the first message, so as to facilitate transmission to a core network.

In another example, after receiving the first message, the first network device may separately forward, to the second network device, data sent by each paged terminal. Specifically, operations of the first network device are all based on an indication of the first message. An uplink transmission message may include indication information, and the indication information may be associated with the first message, to indicate that the uplink transmission message is a response message or a reply message corresponding to the first message, so as to facilitate transmission to a core network.

In a possible example, the first network device may forward data from K paged terminal devices by using one message, and the message may be the third message. K is a positive integer, and K is less than or equal to a quantity of paged terminal devices. K may be a value indicated by a base station, or K may be a predefined value, or K may be a quantity of paged terminal devices. Alternatively, the data from the K paged terminal devices may be forwarded by using a plurality of messages, and the plurality of messages may be messages similar to the third message. The plurality of messages correspond to a same identifier, for example, an identifier like a service identifier, a transaction identifier (transaction ID), a group identifier, or a process identifier. Alternatively, the plurality of messages correspond to a same group of terminal devices. Optionally, after receiving, in S401, the first message carrying the first information, the first network device may determine, based on the first information, to forward the data from the K terminal devices in the foregoing manner, or the first network device may determine, in a data receiving manner, to forward the data from the K terminal devices in the foregoing manner. The first network device may perform determining in another manner. This is not limited in this application.

Similarly, the second network device may send a plurality of pieces of data to the first network device by using one message. The message may be an eighth message in a subsequent embodiment, and the plurality of pieces of data are forwarded by the first network device to a plurality of paged (or selected) terminal devices. Alternatively, the second network device may group a plurality of paged terminal devices, and send data of each terminal device group to the first network device by using one of the plurality of messages. Optionally, data of different terminal device groups is forwarded by using different messages in the plurality of messages. Alternatively, the second network device may send data of each terminal device to the first network device by using one of the plurality of messages. Optionally, data of different terminal devices is forwarded by using different messages in the plurality of messages. The one or more messages may be messages similar to the eighth message. The plurality of messages correspond to a same identifier, for example, an identifier like a service identifier, a transaction identifier (transaction ID), a group identifier, or a process identifier. Alternatively, the plurality of messages correspond to a same group of terminal devices. Optionally, after receiving an uplink message (for example, the third message) carrying the first information or the third information, the second network device may determine, based on the first information or the third information, to send data to the first network device in the foregoing manner.

The first network device is used as an example below for description.

In a possible implementation, when a network pages a plurality of terminals, the first network device may forward, in the foregoing manner, uplink data sent by any one of the plurality of terminals. The first information or the third information is carried in a message for forwarding the uplink data, so that the second network device may determine to process (or parse or decode) the data from the plurality of terminal devices by using the second access technology, or the second network device may determine that the message for forwarding the uplink data is associated with the first message. The second network device does not need a network to maintain one terminal-specific identifier or one terminal-specific context for each of the plurality of terminal devices, thereby reducing network implementation complexity.

If the first information is a service type or a service identifier of the second access technology, the second network device may determine, based on the first information carried in the third message, an identifier associated with an ongoing service, send data to a core network such as an AMF and another control plane network element (for example, a network exposure function (network exposure function, NEF) entity or an application function (application function, AF) entity), and finally send the data to an application layer.

In a possible implementation, when a plurality of terminals paged by the network are associated with a same service type or a same service identifier, a same service type or a same service identifier is carried in a message for forwarding the data from the plurality of terminals, so that the second network device can determine an identifier associated with an ongoing service, to determine a destination address of the data. In this way, a network does not need to maintain one terminal-specific identifier or one terminal-specific context for each of the plurality of terminal devices, thereby reducing network implementation complexity.

Considering a group feature of an AIOT service, a common F1-AP message is introduced in this embodiment of this application, and may be used to transmit multi-user data, to implement F1-AP-based control plane transmission. A network does not need to maintain one terminal-specific identifier or one terminal-specific context for each of the plurality of terminal devices, thereby reducing network implementation complexity.

In a possible implementation, the second message indicates N random access occasions, the N random access occasions are used for access of M terminal devices, N and M are positive integers, and M is less than or equal to N. Alternatively, the third message may indicate the N random access occasions. The following uses an example in which the second message indicates the N random access occasions for description.

The first network device may forward, to the second network device before or after a next random access occasion is triggered, the data received from the first terminal device. Alternatively, when completing one data transmission with a terminal, the first network device may communicate with a next terminal. Alternatively, when receiving a message that is sent by the second network device and that is used to end communication with a terminal, the first network device may communicate with a next terminal. The first network device may alternatively forward, to the second network device at a time, one piece of data received from the terminal device, or may forward, to the second network device at a time, two or more pieces of data received from the terminal device. Examples are used below for description.

Example 1: Receive first data from a first terminal device on a first random access occasion in the N random access occasions, where the first terminal device is one of the M terminal devices; and send a third message to the second network device. Correspondingly, the second network device receives a third message, where the third message includes the first data and the first information; and sends a fourth message, where the fourth message is used to trigger a next random access occasion. The third message may be sent before or after the fourth message.

Optionally, the first data is data that is received from the first terminal device by using the second access technology, the third message is sent or received by using the first access technology, and the fourth message is sent by using the second access technology. The descriptions herein are also applicable to the first data, the second data, the third message, and the fourth message in subsequent examples. Details are not described below.

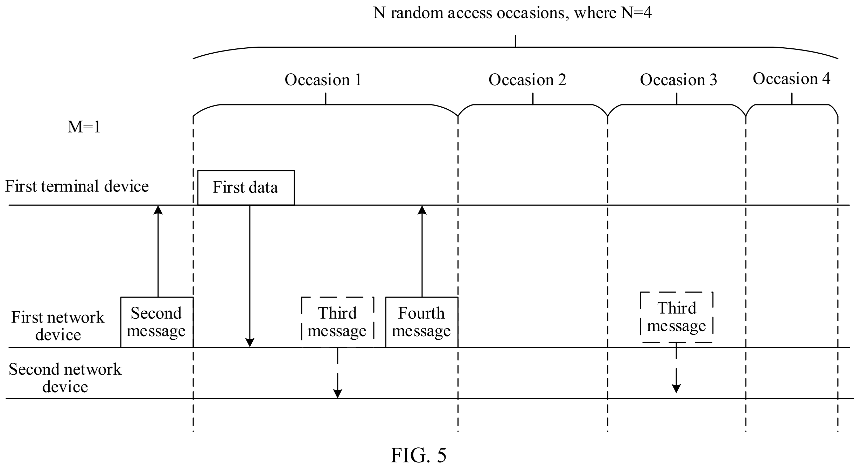

FIG. 5 is a schematic flowchart of a communication method according to an embodiment of this application. For example, N=4 and M=1. The second message indicates four random access occasions (an occasion 1, an occasion 2, an occasion 3, and an occasion 4), and the four random access occasions are used for access of one terminal device (the first terminal device). The first terminal device completes access at the occasion 1, and sends the first data to the first network device. Correspondingly, the first network device receives the first data. The first network device may send a third message to the second network device at the occasion 1, where the third message includes the first data and the first information. After sending the third message, the first network device sends a fourth message at the occasion 1, where the fourth message is used to trigger a next random access occasion. Alternatively, the first network device may first send a fourth message, and then send a third message, where the third message may be sent at the occasion 2, the occasion 3, the occasion 4, or another time. This is not limited in this application. When M is greater than 1, for any one of the M terminal devices, reference may be made to the first terminal device.

Example 2: Receive first data from a first terminal device on a first random access occasion in the N random access occasions, where the first terminal device is one of the M terminal devices; send a fourth message, where the fourth message is used to trigger a next random access occasion; receive second data from a second terminal device on a second random access occasion after the first random access occasion, where the second terminal device is one of the M terminal devices, and the second random access occasion is one of the N random access occasions; and send a third message to the second network device. Correspondingly, the second network device receives the third message, where the third message includes the first data and/or the second data, and the third message further includes the first information.

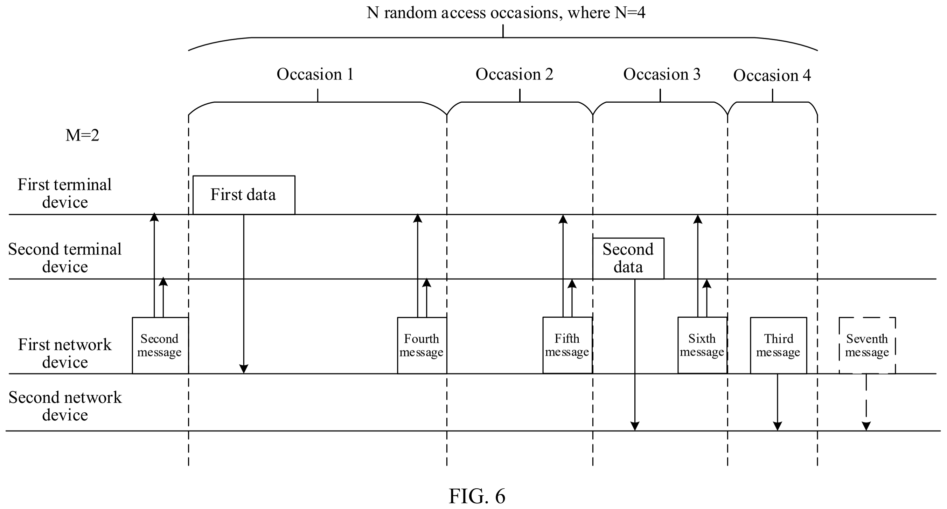

FIG. 6 is a schematic flowchart of a communication method according to an embodiment of this application. For example, N=4 and M=2. The second message indicates four random access occasions (an occasion 1, an occasion 2, an occasion 3, and an occasion 4), and the four random access occasions are used for access of one terminal device (the first terminal device and the second terminal device). The first terminal device completes access at the occasion 1, and sends the first data to the first network device. Correspondingly, the first network device receives the first data. After receiving the first data, the first network device sends a fourth message, where the fourth message is used to trigger a next random access occasion. At the occasion 3 after the occasion 1, the second terminal device completes access, and sends the second data to the first network device. Correspondingly, the first network device receives the second data. The first network device sends a third message. As described in Example 1, the third message may be sent at the occasion 3, the occasion 4, or another time. This is not limited in this application. The third message may include the first data and the second data. Alternatively, the third message may include the first data (or the second data). In this case, the first network device may send a seventh message, where the seventh message includes the second data (or the first data).

When more terminals perform access, in a possible embodiment, the first network device may continue to receive data from the terminal device at a random access occasion after sending the third message. In another possible embodiment, the first network device may include a part or all of the received data in the third message. If the part of the data is included, remaining data may be included in a subsequent message similar to the third message, for example, a seventh message. Alternatively, there may be more messages similar to the third message.

Generally, the network device may perform operations of a plurality of service types on the terminal device. For some service types, the terminal needs to perform uplink data transmission once, for example, in an inventory mode; for some service types, a plurality of data exchanges need to be performed (the data exchange may include uplink data transmission or downlink data transmission); for some service types, the terminal needs to receive downlink data, and the terminal does not need to send uplink data; and the like. The first network device may determine, by using the first message or information carried in the first message, when (or whether) to release a connection to the terminal device, or when (or whether) to complete data transmission with the terminal device, or whether to send a release/transmission complete indication to the terminal device after receiving indication information or a message, or whether downlink feedback needs to be performed, or whether downlink data sent by a core network or an application layer needs to be waited for to perform release. For example, the first network device may determine, by using the first message or information carried in the first message, to release the terminal device upon receiving uplink data once, or to release the terminal device upon receiving downlink data once, or to release the terminal device after receiving uplink data and receiving a downlink feedback of the uplink data, or to release the terminal device after receiving a release indication of a core network or the second network device.

Optionally, the first message further includes second information, and the second information indicates a first service type in a service type of the second access technology. In this case, the first network device may communicate with the terminal device based on a requirement of the first service type, or determine when (or whether) to end communication with the terminal device, or release the terminal device.

In a possible example, data exchange needed for the first service type is completed at a same random access occasion. Examples are used below for description.

Example 3: Determine, based on the first service type, a quantity of exchanges of performing data exchange with a terminal device; and send the fourth message after completing data transmission for the quantity of exchanges.

The first network device determines the quantity of exchanges of exchanging data with the terminal device, for example, determines a total quantity of uplink transmissions and downlink transmissions needed for the first service type, or determines a quantity of uplink transmissions needed for the first service type, or determines a quantity of downlink transmissions needed for the first service type. It may be understood that when the first service type needs only uplink (or downlink) data transmission, the quantity of exchanges is a quantity of uplink transmissions (or downlink transmissions).

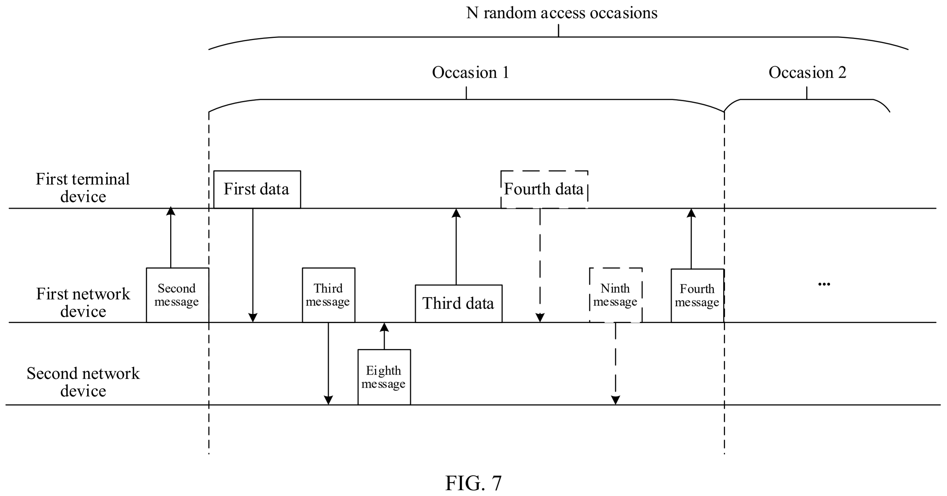

FIG. 7 is a schematic flowchart of a communication method according to an embodiment of this application. The first network device determines a quantity of exchanges based on a first service type. For example, the first service type includes two data transmissions, or the first service type includes one uplink data transmission and one downlink data transmission (which may be a response message for the uplink data transmission). The first network device may receive, at an occasion 1, the first data sent by the first terminal device, and forward the first data to the second network device by using the third message. Further, the first network device may receive, at the occasion 1, the eighth message sent by the second network device, and forward, to the first terminal device, the third data carried in the eighth message. After completing the foregoing data transmission, the first network device sends the fourth message, to trigger a next random access occasion. For another example, the first service type includes three data transmissions, or the first service type includes two uplink data transmissions and one downlink data transmission. As shown in FIG. 7, after forwarding the third data, the first network device may receive the fourth data sent by the first terminal device, and forward the fourth data to the second network device by using a ninth message. After completing the foregoing data transmission, the first network device sends the fourth message, to trigger a next random access occasion.

In the example in FIG. 7, the third message, the eighth message, and the ninth message may include the first information or a variant of the first information, or may not include the first information. Sending the fourth message may be understood as releasing the first terminal device, that is, releasing a connection between a network and the first terminal device. Sending the fourth message is a manner in which the first network device releases the first terminal device, or may be another manner of releasing the first terminal. This is not limited in this application.

Example 4: Determine, based on the first service type, duration of exchanging data with a terminal device; and send the fourth message after performing data transmission for the duration with the first terminal device.

In Example 4, the quantity of exchanges in Example 3 is replaced with exchange duration. For related descriptions, refer to the descriptions in FIG. 7 and Example 3. Details are not described herein again.

Example 5: Send the fourth message after receiving indication information indicating end or release from the second network device. Correspondingly, after completing data exchange with a terminal device, the second network device sends, to the first network device, the indication information indicating end or release.

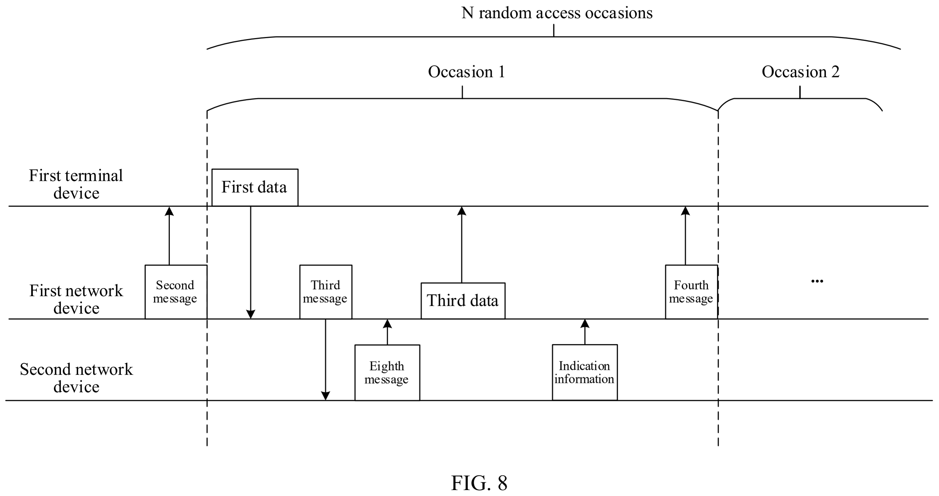

FIG. 8 is a schematic flowchart of a communication method according to an embodiment of this application. The first network device determines an indication of the second network device based on the first service type, and determines, based on the indication of the second network device, when (or whether) the terminal device can be released, or determines whether a next random access occasion can be triggered. For example, the first network device may receive, on an occasion 1, the first data sent by the first terminal device, and forward the first data to the second network device by using the third message. Further, the first network device may receive, on the occasion 1, the eighth message sent by the second network device, and forward, to the first terminal device, the third data carried in the eighth message. After completing the foregoing data transmission, the first network device receives indication information indicating end or release from the second network device, and the first network device sends the fourth message, to trigger a next random access occasion.

In the example in FIG. 8, the third message, the eighth message, and the indication information may include the first information or a variant of the first information, or may not include the first information. Sending the fourth message may also be understood as releasing the first terminal device. For details, refer to the foregoing related descriptions. Details are not described herein again.

In another possible example, data exchange needed for the first service type does not need to be completed on a same random access occasion. In a process of communicating with one terminal device, the first network device may be interleaved with communication with another terminal device. When the first network device releases the communication with the terminal depends on an indication of the first information or an indication of the second network device. Examples are used below for description.

Example 6: Determine, based on the first service type, a quantity of exchanges or duration of exchanging data with a terminal device; include an identifier specific to the terminal device when performing data transmission for the quantity of exchanges or the duration with the second network device; and release the first terminal device after performing the data transmission for the quantity of exchanges or the duration with the first terminal device.

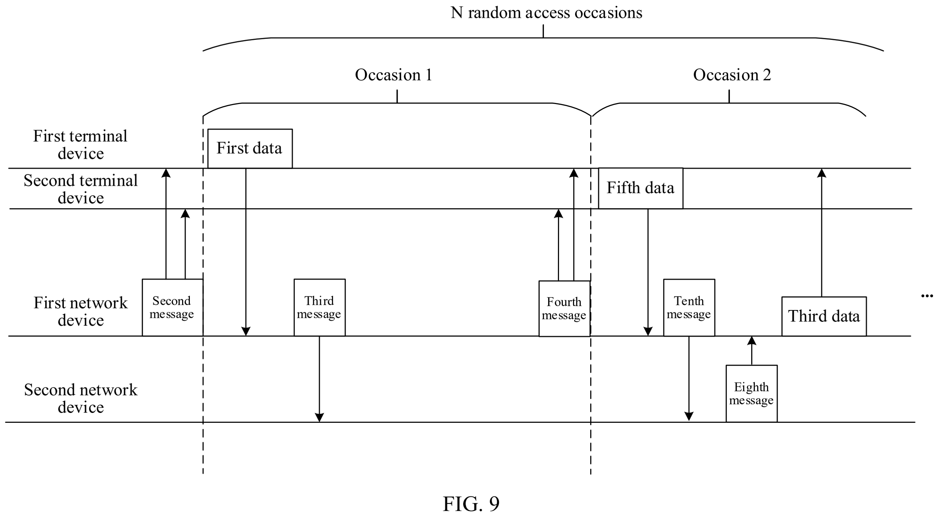

FIG. 9 is a schematic flowchart of a communication method according to an embodiment of this application. The first network device determines a quantity of exchanges or exchange duration based on the first service type. For example, the first service type includes two data transmissions, or the first service type includes one uplink data transmission and one downlink data transmission. The first network device may receive, on an occasion 1, the first data sent by the first terminal device, forward the first data to the second network device by using the third message, and include an identifier specific to the first terminal device in the third message. Further, the first network device may receive, on an occasion 2 (or another time), an eighth message sent by the second network device, and forward third data carried in the eighth message to the first terminal device, where the eighth message carries the identifier specific to the first terminal device. After completing the foregoing data transmission, the first network device releases the first terminal device. In the example in FIG. 9, the identifier specific to the first terminal device that is carried in the third message or the eighth message may be a same identifier or different identifiers.

It may be understood that the first network device may further communicate with another terminal device on the occasion 2. For fifth data in the figure, the first network device receives the fifth data from the second terminal device on the occasion 2, and forwards the fifth data to the second network device by using a tenth message. The tenth message carries an identifier specific to the second network device. The first network device may receive the fifth data before or after receiving the eighth message, or before or after sending the third data. The first network device may send the tenth message before or after receiving the eighth message, or before or after sending the third data. A sequence of messages used by the first network device to communicate with the plurality of terminal devices is not limited in this application. After performing data transmission with each of the plurality of terminal devices for a quantity of exchanges or duration, the first network device releases the terminal device.

Example 7: Include an identifier specific to the terminal device when performing data transmission with the second network device; and release the terminal device after receiving indication information indicating end or release from the second network device.

For related descriptions of Example 7, refer to the descriptions in FIG. 9 and Example 6. A condition for releasing the first terminal device is replaced with receiving the indication information indicating end or release from the second network device. Details are not described herein again.

In Example 3 to Example 7, the second information may be one of the following: a service type of a service using the second access technology, or a service identifier of a service using the second access technology.

The second information may explicitly indicate the first service type in a service type of a service using the second access technology. For example, the second information is an identifier of the first service type, or the second information indicates that an ongoing service is the first service type. The second information may further implicitly indicate the first service type. For example, the second information may be a service identifier, and a service indicated by the service identifier is the first service type.

The first information and the second information may be a same information element, a same field, a same parameter, or the like, or may be different information elements, different fields, different parameters, or the like.

Including the identifier specific to the terminal device may also be including an identifier such as a group identifier or a process identifier. The group identifier may be a group identifier of a terminal device group, or an identifier of a group of terminal devices.

In this application, there may be a plurality of relay nodes between an access network node and a terminal device. Therefore, in the method on the first network device side, the second network device may also be a network device having a forwarding function, and the second network device may be a parent node of the first network device, or a node closer to a network side or an access network device in a communication link. Alternatively, in the method on the second network device side, communication between the first network device and the terminal device may be replaced with communication between the first network device and a third network device. The third network device is a network device having a forwarding function, and the third network device may be a child node of the first network device, or a node closer to the terminal side in a communication link.

In this embodiment of this application, a relay architecture is introduced, and the first network device and the second network device jointly complete a function of a reader, thereby effectively increasing a coverage area of the reader. In addition, enhancing and improving an IAB architecture can implement a method based on layer 2 relay of a network node. This embodiment is also applicable to data transmission of an AIOT service in a CU-DU separation architecture.

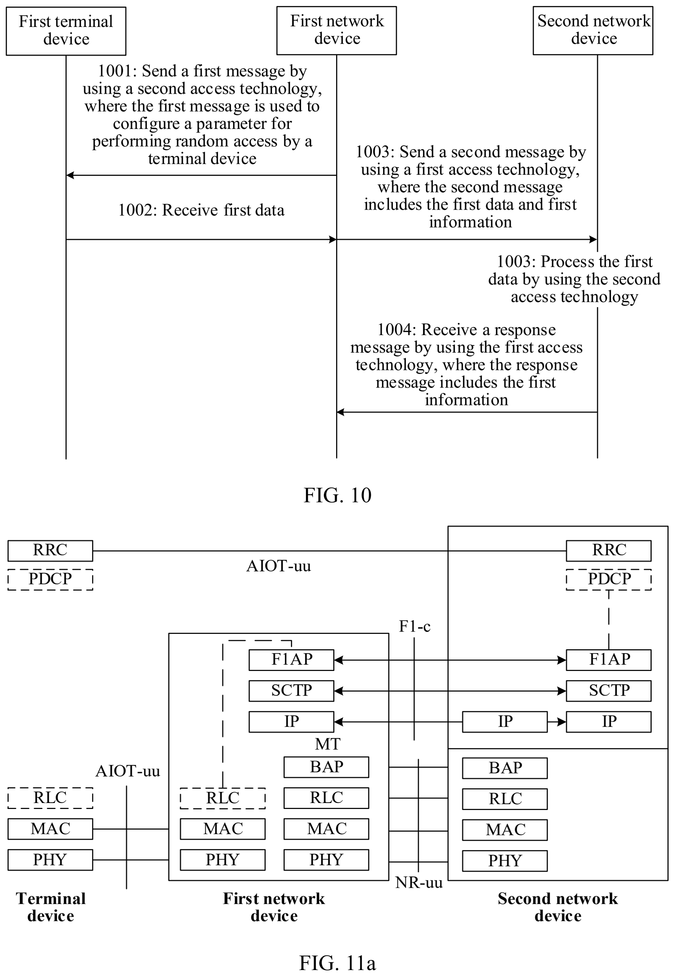

FIG. 4 shows a procedure in which a network performs paging to trigger a terminal to perform access and perform data transmission in a scenario in which the network performs service triggering or downlink service triggering. For a scenario in which a terminal performs service triggering or uplink service triggering, refer to FIG. 10. FIG. 10 is a schematic flowchart of a communication method according to an embodiment of this application. The method shown in FIG. 10 may be performed by a first network device, or may be performed by a chip in the first network device, or may be performed by some units or modules in the first network device. Alternatively, the method shown in FIG. 10 may be performed by another type of product, and a person skilled in the art may make further extension according to the content disclosed in the specification. For example, the method shown in FIG. 10 is performed by a first network device. The method shown in FIG. 10 includes step 1001 to step 1004.

S1001: The first network device sends a first message by using a second access technology, or the first network device sends a first message, where the first message is used to configure a parameter for performing random access by a terminal device. This step is optional.

Specifically, the first network device may periodically send the first message, where the first message may be a broadcast message, for example, system information, a master information block MIB, a system information block SIB, or beacon information.

The parameter for performing random access by the terminal device may be configured by using the first message. For example, a random access resource may be configured, and the random access resource is used for access of the terminal device. Correspondingly, when a service needs to be transmitted or a network needs to be accessed, the terminal device may determine the random access resource based on the parameter configuration in the first message. Further, the terminal device may send a pilot on the random access resource, that is, initiate random access.

The terminal device initiates random access. For an access procedure of the terminal device, refer to the foregoing descriptions, or refer to a related procedure in FIG. 2. In other words, the terminal device may actively initiate random access after receiving the random access parameter configuration, or may initiate random access after being selected by the first network device.

If the terminal device receives a valid response message, it indicates that the terminal device successfully performs access.

S1002: The first network device receives first data from the terminal device.

The first data is carried in an uplink message, for example, an uplink direct transfer message. The uplink message may be an RRC message, or the uplink message may be a MAC PDU or a MAC SDU. The message may include a NAS message. The NAS message mainly includes service data, and may also include a registration request, a UE identifier, destination address information, and the like. A core network performs authentication by using content of the NAS message, or determines a data transmission destination based on content of the NAS message.

S 1003: When the first data is received by using the second access technology, the first network device sends a second message to a second network device by using a first access technology, or the first network device sends a second message to a second network device, where the second message includes the first data and first information, and the first information indicates the second access technology. Correspondingly, the second network device receives the second message. Optionally, the second network device processes the first data by using the second access technology.

After receiving the first data sent by the terminal, the first network device may forward the received first data to the second network device by sending the second message. The second message carries the first information. Therefore, the second network device may determine, based on the first information carried in the second message, to process the first data by using the second access technology. For example, the first data carried in the third message may be interpreted based on a protocol stack or a signaling format of the second access technology. Specifically, the second network device may determine that the third message serves an AIOT service, and therefore may decode the message by using the RRC protocol or PDCP of AIOT.

Alternatively, the second message may not include the first information, but the second message indicates the second access technology. For example, if the second message is a message dedicated to the second access technology, the second message indicates the second access technology. The second network device may determine, by using the second message, that content of the message is associated with the second access technology, or determine to process the first data by using the second access technology. For example, the content included in the message is processed by using a protocol stack corresponding to AIOT. For descriptions of the second message herein, refer to the descriptions of the third message in FIG. 4.

For the first information, the first access technology, or the second access technology, refer to the related descriptions in FIG. 4. The second message may be an uplink RRC transmission message or an initial uplink RRC transmission message, and the message includes an RRC message, a MAC PDU, or a MAC SDU received from the terminal device.

Alternatively, the first information in step S1003 may be an identifier specific to the terminal device. When the first network device forwards the received first data, the second message carries the terminal-specific identifier. The second network device may determine, by using the identifier, to process the first data by using the second access technology. If there are still a plurality of data exchanges between the network and the terminal device, when the plurality of data exchanges are performed, an exchange message between the first network device and the second network device may carry the terminal-specific identifier. Further, in any one of the plurality of data exchanges, a same identifier may be carried, or different identifiers may be carried. For details, refer to the related descriptions in Example 6 and Example 7.

Optionally, the second network device sends the first data and the first information to a core network device. The first information herein may also be a variant of the first information. In a possible implementation, an interface message sent by the second network device to the core network device may include the first information. In another possible implementation, the NAS message may include the first data and the first information. Alternatively, the second network device sends the first data to the core network device, where the first data may not include the first information, and the second radio access technology is indicated by using a message for sending the first data.

Optionally, the core network device may be an access and mobility management function (access and mobility management function, AMF). In a possible implementation, the AMF sends a link establishment request to an NEF, where the NEF determines an association relationship with an external server based on the first information (for example, a UE identifier), and sends data to the NEF. In another implementation, the AMF may alternatively obtain subscription information of the UE based on the first information (for example, a UE identifier), establish a relationship with an external server, send data of a tag to an SMF, forward the data to an NEF, and then forward the data to the external server.

S1004: The first network device receives a response message from the second network device by using the first access technology, or the first network device receives a response message from the second network device, where the response message includes the first information. Correspondingly, the second network device sends the response information. This step is optional.

If the external server still has downlink data for the terminal device, the external server may send the downlink data to the AMF, the AMF then sends the data to the second network device, and the second network device forwards the data to the first network device. If the first network device is a device that supports the first access technology and the second access technology, or the first network device serves both a terminal device using the first access technology and a terminal device using the second access technology, the second network device may include the first information when forwarding the data to the first network device. Alternatively, the response message may not include the first information, that is, the response message indicates the second access technology.

It may be understood that the first information carried in the response message may be the first information carried in the second message, or may be a variant of the first information carried in the second message, or may be information with a function similar to that of the first information carried in the second message. That the response message includes the first information may be replaced with that the response message includes second information, and the second information indicates the second access technology. For the second information, refer to the descriptions of the first information.

In this embodiment of this application, a relay architecture is introduced, and the first network device and the second network device jointly complete a function of a reader, thereby effectively increasing a coverage area of the reader. In addition, enhancing and improving an IAB architecture can implement a method based on layer 2 relay of a network node when a terminal service is triggered, thereby effectively extending a coverage area of an AIOT UE. In addition, this embodiment is also applicable to data transmission of an AIOT service in a CU-DU separation architecture.

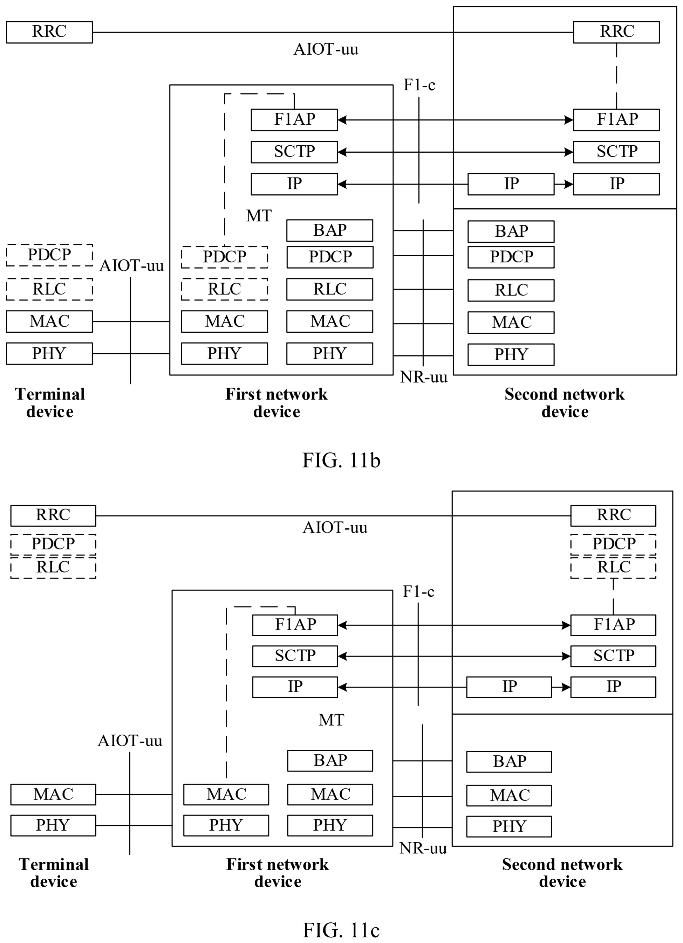

FIG. 11a, FIG. 11b, and FIG. 11c each are a diagram of a protocol stack architecture of a communication method according to an embodiment of this application. In the method provided in this embodiment of this application, a relay protocol stack architecture described below may be used. It may be understood that the architecture is also applied to a CU-DU separation scenario.

In the protocol stack architecture provided in this embodiment of this application, the first network device has a part of a layer 2 peer protocol stack in the terminal device.

Specifically, refer to FIG. 11a, a protocol stack of the terminal device may include a physical layer (physical layer, PHY layer), a MAC layer, a radio link control layer (Radio Link Control, RLC layer), a PDCP layer, and an RRC layer. The PDCP layer and the RLC layer are optional. In other words, the protocol stack of the terminal device may not include the PDCP layer and/or the RLC layer. Alternatively, the RLC/PDCP layer has only a transparent mode. In FIG. 11a, the first network device may support PHY layer and MAC layer peer protocol stacks in protocol stacks of the terminal device. Optionally, if the terminal device supports the RLC layer protocol, the first network device further supports an RLC layer peer protocol stack. All the layer protocol stacks in the foregoing descriptions are protocol stacks related to the second access technology. For example, the terminal device and the first network device communicate with each other through an AIOT-uu interface, and a related protocol stack is an AIOT protocol stack. In FIG. 11a, the first network device further supports a protocol stack related to the first access technology. The protocol stack includes an F1-AP layer, a stream control transmission protocol (Stream Control Transmission Protocol, SCTP) layer, an internet protocol (Internet Protocol, IP) layer, a backhaul adaptation protocol (Backhaul Adaptation Protocol, BAP) layer, an RLC layer, a MAC layer, and a PHY layer. In FIG. 11a, the second network device supports a protocol stack related to the first access technology, and the protocol stack includes a protocol stack peer protocol that is supported by the first network device and that is related to the first access technology. In addition, the second network device further supports a protocol that is supported by the terminal device but not supported by the first network device and that is related to the second access technology. An RRC layer peer protocol stack may be included. Optionally, if the terminal device supports the PDCP layer, but the first network device does not support the PDCP layer, the second network device further supports the PDCP layer peer protocol stack. It should be understood that a dashed-line box in FIG. 11a indicates that a corresponding protocol layer may or may not exist.

In a possible example, the first network device may receive control plane signaling sent by the terminal device, where the control plane signaling is signaling encapsulated (encoded) by the terminal device by using a protocol related to the second access technology, for example, send an AIOT RRC message or NAS message. Further, the first network device may perform interpretation (or decoding) by using a protocol related to the second access technology, and then encapsulate the interpreted information by using a protocol related to the first access technology or another protocol, for example, by using an F1-AP message. Further, the first network device may send information encapsulated by using the protocol related to the first access technology, and correspondingly, the second network device receives the information. The second network device may interpret the received information by using a peer protocol stack related to the first access technology, and further, the second network device may interpret, by using a peer protocol related to the second access technology, the information interpreted in the previous step. Finally, the second network device may interpret content of the control signaling initially sent by the terminal device.

In the foregoing example, an IAB backhaul mechanism is used between the first network device and the second network device, that is, backhaul is performed by using the first access technology. The control plane signaling may be sent from the first network device to the second network device in a wireless manner, or may be sent to the second network device in a wired manner.

The protocol architectures provided in FIG. 11b and FIG. 11c are different from the protocol architecture provided in FIG. 11a. In FIG. 11b, the first network device may support the PDCP layer protocol. In FIG. 11c, the first network device does not support the PDCP layer protocol or the RLC layer protocol. For descriptions of FIG. 11b and FIG. 11c, refer to FIG. 11a. Details are not described herein again.

It can be learned that, based on the protocol stack architecture provided in this embodiment of this application, the first network device or the second network device may interpret, by using a protocol related to the second access technology, signaling sent by the terminal device. Therefore, when sending the signaling, the terminal device may not identify whether the first network device or a conventional reader is accessed. In other words, when the terminal device accesses the first network device or accesses the conventional reader, air interface protocols used by the terminal device are consistent, or air interface signaling used by the terminal device for access is not affected by different accessed nodes. For example, when an AIOT terminal accesses the first network device or accesses the conventional reader, the AIOT protocol may be used for access. In this way, the terminal device does not need to support protocols related to a plurality of access technologies. Therefore, this method can reduce implementation complexity of the terminal device.

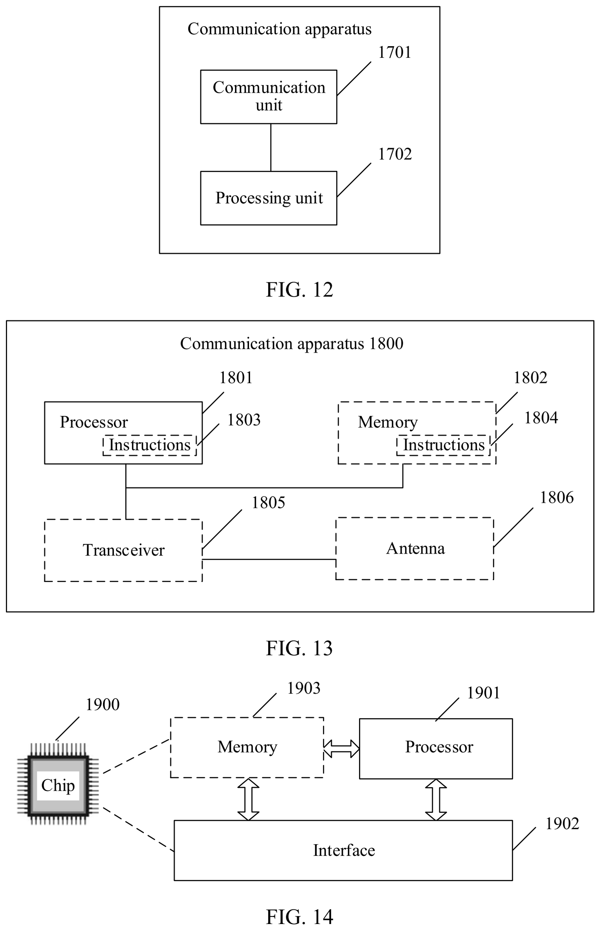

FIG. 13 is a diagram of a structure of another communication apparatus. The communication apparatus 1800 may be the first network device or the second network device in the foregoing method embodiments, or may be a chip, a chip system, a processor, or the like that supports the first network device or the second network device in implementing the foregoing method. The communication apparatus may be configured to implement the methods described in the foregoing method embodiments. For details, refer to the descriptions in the foregoing method embodiments.

The communication apparatus 1800 may include one or more processors 1801. The processor 1801 may be a general-purpose processor, a dedicated processor, or the like. For example, the processor 1801 may be a baseband processor or a central processing unit. The baseband processor may be configured to process a communication protocol and communication data. The central processing unit may be configured to: control the communication apparatus (for example, a base station, a baseband chip, a terminal, a terminal chip, a DU, or a CU), execute a software program, and process data of the software program.

Optionally, the communication apparatus 1800 may include one or more memories 1802. The memory may store instructions 1804, and the instructions may be run on the processor 1801, to enable the communication apparatus 1800 to perform the method described in the foregoing method embodiments. Optionally, the memory 1802 may further store data. The processor 1801 and the memory 1802 may be separately disposed, or may be integrated together.

Optionally, the communication apparatus 1800 may further include a transceiver 1805 and an antenna 1806. The transceiver 1805 may be referred to as a transceiver unit, a transceiver machine, a transceiver circuit, or the like, and is configured to implement receiving and sending functions. The transceiver 1805 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. The processing unit 1702 shown in FIG. 12 may be the processor 1801. The communication unit 1701 may be the transceiver 1805.

When the communication apparatus is applied to a first network device:
The transceiver 1805 may complete the receiving action in S401, the sending action in S402, the receiving action in S403, and the sending action in S404 in the foregoing embodiment.

The transceiver 1805 is configured to receive a first message from a second network device by using a first access technology, where the first message is used for paging, the first message includes first information, and the first information indicates a second access technology; and the transceiver 1805 is further configured to send a second message by using the second access technology, where the second message is used to page a terminal device.

Optionally, the second message indicates N random access occasions, the N random access occasions are used for access of M terminal devices, N and M are positive integers, and M is less than or equal to N. The transceiver 1805 is further configured to receive, on a first random access occasion in the N random access occasions, first data from a first terminal device by using the second access technology, where the first terminal device is one of the M terminal devices. The transceiver 1805 is further configured to send a third message to the second network device by using the first access technology, where the third message includes the first data and the first information. The transceiver 1805 is further configured to send a fourth message by using the second access technology, where the fourth message is used to trigger a next random access occasion.

Optionally, the second message indicates N random access occasions, the N random access occasions are used for access of M terminal devices, N and M are positive integers, and M is less than or equal to N. The transceiver 1805 is further configured to receive, on a first random access occasion in the N random access occasions, first data from a first terminal device by using the second access technology, where the first terminal device is one of the M terminal devices. The transceiver 1805 is further configured to send a fourth message by using the second access technology, where the fourth message is used to trigger a next random access occasion. The transceiver 1805 is further configured to receive, on a second random access occasion after the first random access occasion, second data from a second terminal device by using the second access technology, where the second terminal device is one of the M terminal devices, and the second random access occasion is one of the N random access occasions. The transceiver 1805 is further configured to send a third message to the second network device by using the first access technology, where the third message includes the first data and/or the second data, and the third message further includes the first information.

Optionally, the first message further includes second information, the second information indicates a first service type in a service type of the second access technology, and the processor 1801 is configured to determine, based on the first service type, a quantity of exchanges of exchanging data with a terminal device; and sending the fourth message by using the second access technology includes: sending the fourth message after completing data transmission for the quantity of exchanges.

Optionally, the first information is one of the following: a terminal type of the second access technology, a terminal identifier of the second access technology, a service type of the second access technology, a service identifier of the second access technology, and an identifier of the second access technology.

Optionally, the first access technology is a new radio NR technology, and the second access technology is an access technology used for the internet of things.

When the communication apparatus is applied to a second network device:
The transceiver 1805 may complete the sending action in S401, the receiving action before S401, and the receiving action in S404 in the foregoing embodiment. The processor 1801 may complete the processing action in S404.

The transceiver 1805 is configured to send a first message to a first network device by using a first access technology, where the first message is used to page a first terminal device, the first message includes first information, and the first information indicates a second access technology. The transceiver 1805 is further configured to indicate, by using the first information, the first network device to send a second message by using the second access technology, and the second message is used to page the first terminal device.

Optionally, the transceiver 1805 is further configured to receive a third message from the first network device by using the first access technology, where the third message includes first data and the first information; and the processor 1801 is configured to process the first data by using the second access technology.

Optionally, the first message further includes second information, the second information indicates a first service type in a service type of the second access technology, and the method further includes: The processor 1801 is configured to indicate, by using the first service type, a quantity of exchanges of exchanging data with a terminal device.

Optionally, the first information is one of the following: a terminal type of the second access technology, a terminal identifier of the second access technology, a service type of the second access technology, a service identifier of the second access technology, and an identifier of the second access technology.

Optionally, the first access technology is a new radio NR technology, and the second access technology is an access technology used for the internet of things.

When the communication apparatus is applied to a first network device:
The transceiver 1805 may complete the sending action in S1001, the receiving action in S1002, the sending action in S1003, and the receiving action in S1004 in the foregoing embodiment.

The transceiver 1805 is configured to receive first data from a terminal device. The transceiver 1805 is further configured to: when the first data is received by using a second access technology, sending a second message to a second network device by using a first access technology, where the second message includes the first data and first information, and the first information indicates the second access technology.

Optionally, before receiving the first data from the terminal device, the transceiver 1805 is further configured to send a first message by using the second access technology, where the first message is used to configure a parameter for performing random access by the terminal device.

Optionally, the transceiver 1805 is further configured to receive a response message from the second network device by using the first access technology, where the response message includes the first information.

Optionally, the first information is one of the following: a terminal type of the second access technology, a terminal identifier of the second access technology, a service type of the second access technology, a service identifier of the second access technology, and an identifier of the second access technology.

Optionally, the first access technology is a new radio NR technology, and the second access technology is an access technology used for the internet of things.

When the communication apparatus is applied to a second network device:
The transceiver 1805 may complete the receiving action in S1003 and the sending action in S1004 in the foregoing embodiment. The processor 1801 may complete the processing action in S1003.

The transceiver 1805 is configured to receive a second message from a first network device by using a first access technology, where the second message includes first data and first information, and the first information indicates a second access technology. The processor 1801 is configured to process the first data by using the second access technology.

Optionally, the transceiver 1805 is further configured to send a response message to the first network device by using the first access technology, where the response message includes the first information.

Optionally, the first information is one of the following: a terminal type of the second access technology, a terminal identifier of the second access technology, a service type of the second access technology, a service identifier of the second access technology, and an identifier of the second access technology.

Optionally, the first access technology is a new radio NR technology, and the second access technology is an access technology used for the internet of things.

In another possible design, the processor 1801 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to: read and write code/data. Alternatively, the transceiver circuit, the interface, or the interface circuit may be configured to: transmit or transfer a signal.

In still another possible design, optionally, the processor 1801 may store instructions 1803, and the instructions 1803 are run on the processor 1801, to enable the communication apparatus 1800 to perform the method described in the foregoing method embodiments. The instructions 1803 may be solidified in the processor 1801. In this case, the processor 1801 may be implemented by hardware.

In still another possible design, the communication apparatus 1800 may include a circuit. The circuit may implement a sending, receiving, or communication function of the first network device or the second network device in the foregoing method embodiments. The processor and the transceiver described in this embodiment of this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-channel metal oxide semiconductor (N-channel metal oxide semiconductor, NMOS), a P-channel metal oxide semiconductor (P-channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiments may be a first communication device or a first terminal device. However, a scope of the communication apparatus described in embodiments of this application is not limited thereto, and a structure of the communication apparatus may not be limited by FIG. 13. The communication apparatus may be an independent device or may be a part of a large device. For example, the communication apparatus may be:
(1) an independent integrated circuit IC, a chip, a chip system, or subsystem;
(2) a set that has one or more ICs, where optionally, the IC set may alternatively include a storage component configured to store data and an instruction;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, or an artificial intelligence device; or
(6) others.

For a case in which the communication apparatus may be a chip or a chip system, refer to a diagram of a structure of a chip shown in FIG. 14. The chip 1900 shown in FIG. 14 includes a processor 1901 and an interface 1902. Optionally, the chip may further include a memory 1903. There may be one or more processors 1901, and there may be a plurality of interfaces 1902.

For a case in which the chip is configured to implement a function of the first network device or the second network device in embodiments of this application:
The interface 1902 is configured to: receive or output a signal.

The processor 1901 is configured to perform a data processing operation of the first network device or the second network device.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features are combined with other features based on requirements. Correspondingly, the communication apparatus provided in embodiments of this application may also correspondingly implement these features or functions. Details are not described herein.

It should be noted that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and methods described in this specification includes but is not limited to these and any memory of another proper type.

This application further provides a computer-readable medium. The storage medium stores a computer program or instructions. When the computer program or the instructions are executed by a communication device, a function in any one of the foregoing method embodiments is implemented.

This application further provides a computer program product including instructions. When a computer reads and executes the computer program product, the computer is enabled to implement a function in any one of the foregoing method embodiments.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The terms "first", "second", and the like in this specification, claims, and accompanying drawings of this application are used to distinguish between different objects, but are not used to describe a specific order. In addition, the terms "including", "having", and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a first network device or an apparatus in the first network device, and the method comprises:
receiving a first message from a second network device by using a first access technology, wherein the first message is used for paging, the first message comprises first information, and the first information indicates a second access technology; and
sending a second message by using the second access technology, wherein the second message is used to page a terminal device.

2. The method according to claim 1, wherein the second message indicates N random access occasions, the N random access occasions are used for access of M terminal devices, N and M are positive integers, and M is less than or equal to N; and
the method further comprises:
receiving, on a first random access occasion in the N random access occasions, first data from a first terminal device by using the second access technology, wherein the first terminal device is one of the M terminal devices;
sending a third message to the second network device by using the first access technology, wherein the third message comprises the first data and the first information; and
sending a fourth message by using the second access technology, wherein the fourth message is used to trigger a next random access occasion.

3. The method according to claim 1, wherein the second message indicates N random access occasions, the N random access occasions are used for access of M terminal devices, N and M are positive integers, and M is less than or equal to N; and
the method further comprises:
receiving, on a first random access occasion in the N random access occasions, first data from a first terminal device by using the second access technology, wherein the first terminal device is one of the M terminal devices;
sending a fourth message by using the second access technology, wherein the fourth message is used to trigger a next random access occasion;
receiving, on a second random access occasion after the first random access occasion, second data from a second terminal device by using the second access technology, wherein the second terminal device is one of the M terminal devices, and the second random access occasion is one of the N random access occasions; and
sending a third message to the second network device by using the first access technology, wherein the third message comprises the first data and/or the second data, and the third message further comprises the first information.

4. The method according to claim 2, wherein
the first message further comprises second information, the second information indicates a first service type in a service type of a service using the second access technology, and the method further comprises:
determining, based on the first service type, a quantity of exchanges of exchanging data with a terminal device; and
sending the fourth message by using the second access technology comprises: sending the fourth message after completing data transmission for the quantity of exchanges.

5. The method according to any one of claims 1 to 4, wherein the first information is one of the following:
a terminal type of a terminal using the second access technology, a terminal identifier of a terminal using the second access technology, a service type of a service using the second access technology, a service identifier of a service using the second access technology, and an identifier of the second access technology.

6. The method according to any one of claims 1 to 5, comprising:
the first access technology is a new radio NR technology; and
the second access technology is an access technology used for the internet of things.

7. A communication method, wherein the method is applied to a second network device or an apparatus in the second network device, and the method comprises:
sending a first message to a first network device by using a first access technology, wherein the first message is used to page a first terminal device, the first message comprises first information, and the first information indicates a second access technology; and
the first information indicates the first network device to send a second message by using the second access technology, and the second message is used to page the first terminal device.

8. The method according to claim 7, wherein the method further comprises:
receiving a third message from the first network device by using the first access technology, wherein the third message comprises first data and the first information; and
processing the first data by using the second access technology.

9. The method according to claim 8, wherein
the first message further comprises second information, the second information indicates a first service type in a service type of a service using the second access technology, and the method further comprises:
indicating, based on the first service type, a quantity of exchanges of exchanging data with a terminal device.

10. The method according to any one of claims 7 to 9, wherein the first information is one of the following:
a terminal type of a terminal using the second access technology, a terminal identifier of a terminal using the second access technology, a service type of a service using the second access technology, a service identifier of a service using the second access technology, and an identifier of the second access technology.

11. The method according to any one of claims 7 to 10, comprising:
the first access technology is a new radio NR technology; and
the second access technology is an access technology used for the internet of things.

12. A communication method, wherein the method is applied to a first network device or an apparatus in the first network device, and the method comprises:
receiving first data from a terminal device; and
when the first data is received by using a second access technology, sending a second message to a second network device by using a first access technology, wherein the second message comprises the first data and first information, and the first information indicates the second access technology.

13. The method according to claim 12, wherein before receiving the first data from the terminal device, the method further comprises:
sending a first message by using the second access technology, wherein the first message is used to configure a parameter for performing random access by the terminal device.

14. The method according to claim 12 or 13, wherein the method further comprises:
receiving a response message from the second network device by using the first access technology, wherein the response message comprises the first information.

15. The method according to any one of claims 12 to 14, wherein the first information is one of the following:
a terminal type of a terminal using the second access technology, a terminal identifier of a terminal using the second access technology, a service type of a service using the second access technology, a service identifier of a service using the second access technology, and an identifier of the second access technology.

16. The method according to any one of claims 12 to 15, comprising:
the first access technology is a new radio NR technology; and
the second access technology is an access technology used for the internet of things.

17. A communication method, wherein the method is applied to a second network device or an apparatus in the second network device, and the method comprises:
receiving a second message from a first network device by using a first access technology, wherein the second message comprises first data and first information, and the first information indicates a second access technology; and
processing the first data by using the second access technology.

18. The method according to claim 17, wherein the method further comprises:
sending a response message to the first network device by using the first access technology, wherein the response message comprises the first information.

19. The method according to claim 17 or 18, wherein the first information is one of the following:
a terminal type of a terminal using the second access technology, a terminal identifier of a terminal using the second access technology, a service type of a service using the second access technology, a service identifier of a service using the second access technology, and an identifier of the second access technology.

20. The method according to any one of claims 17 to 19, comprising:
the first access technology is a new radio NR technology; and
the second access technology is an access technology used for the internet of things.

21. A communication apparatus, comprising a unit configured to perform the method according to any one of claims 1 to 6, or comprising a unit configured to perform the method according to any one of claims 12 to 16.

22. A communication apparatus, comprising a unit configured to perform the method according to any one of claims 7 to 11, or comprising a unit configured to perform the method according to any one of claims 17 to 20.

23. A communication apparatus, comprising a processor, wherein the processor is configured to implement the method according to any one of claims 1 to 6, or the processor is configured to implement the method according to any one of claims 12 to 16, or the processor is configured to implement the method according to any one of claims 7 to 11, or the processor is configured to implement the method according to any one of claims 17 to 20.

24. A chip, comprising a processor and an interface, wherein the processor is coupled to the interface, the interface is configured to: receive or output a signal, and the processor is configured to execute code instructions, so that the method according to any one of claims 1 to 6 is performed, or the method according to any one of claims 12 to 16 is performed, or the method according to any one of claims 7 to 11 is performed, or the method according to any one of claims 17 to 20 is performed.

25. A computer-readable storage medium, wherein the computer-readable storage medium stores computer-executable instructions, and when the computer-executable instructions are invoked by the computer, the computer is enabled to perform the method according to any one of claims 1 to 6, or the computer is enabled to perform the method according to any one of claims 12 to 16, or the computer is enabled to perform the method according to any one of claims 7 to 11, or the computer is enabled to perform the method according to any one of claims 17 to 20.
